(19) Europäisches Patentamt
European Patent Office
Office européen des brevets

(11) **EP 1 945 340 B1**

(12) **EUROPÄISCHE PATENTSCHRIFT**

(45) Veröffentlichungstag und Bekanntmachung des Hinweises auf die Patenterteilung:
**02.11.2016 Patentblatt 2016/44**

(51) Int Cl.:
***B01F 17/00*** (2006.01)          ***B01F 3/08*** (2006.01)
***B01F 3/12*** (2006.01)

(21) Anmeldenummer: **06818473.8**

(22) Anmeldetag: **10.11.2006**

(86) Internationale Anmeldenummer:
**PCT/EP2006/010806**

(87) Internationale Veröffentlichungsnummer:
**WO 2007/054339 (18.05.2007 Gazette 2007/20)**

(54) **LANGZEITSTABILE DISPERSION UND VERFAHREN ZUR HERSTELLUNG DER DISPERSION**

DISPERSION THAT REMAINS STABLE OVER A LONG PERIOD AND METHOD FOR PRODUCING SAID DISPERSION

DISPERSION A STABILITE A LONG TERME ET PROCEDE POUR PRODUIRE LADITE DISPERSION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität:
10.11.2005  DE 102005055314
10.11.2005  DE 102005055313
10.11.2005  DE 102005055316
12.12.2005  DE 102005059177
12.12.2005  DE 102005059187
09.03.2006  DE 102006011881
24.07.2006  DE 102006034079
08.09.2006  DE 102006043653
08.09.2006  DE 102006043651
08.09.2006  DE 102006043652
08.09.2006  DE 102006043654

(43) Veröffentlichungstag der Anmeldung:
**23.07.2008 Patentblatt 2008/30**

(73) Patentinhaber: **Parras, Karl-Heinz**
**90549 Nürnberg (DE)**

(72) Erfinder:
• **PARRAS, Karl-Heinz**
**90549 Nürnberg (DE)**
• **SCHEWE, Johanna**
**91166 Georgensgmünd (DE)**
• **KRIELE, Werner**
**86732 Oettingen i. Bay. (DE)**

(74) Vertreter: **Louis Pöhlau Lohrentz**
**Patentanwälte**
**Postfach 30 55**
**90014 Nürnberg (DE)**

(56) Entgegenhaltungen:
EP-A- 0 966 889       EP-A- 0 987 007
EP-A2- 1 216 958      WO-A-96/20777
WO-A2-98/18884        DE-A1- 3 738 223
DE-A1- 19 805 121     US-A- 5 662 932

EP 1 945 340 B1

**Beschreibung**

Die Erfindung betrifft eine langzeitstabile Dispersion, die Verwendung der Dispersion sowie ein Verfahren zur Herstellung der Dispersion.

Bei einer Dispersion handelt es sich um ein Gemenge aus mindestens zwei Stoffen, die sich nicht oder kaum ineinander lösen und/oder chemisch miteinander verbinden. Eine Dispersion aus zwei oder mehreren Flüssigkeiten wird auch als Emulsion bezeichnet, eine Dispersion aus Flüssigkeit und Feststoff als Suspension.

Bei einer Emulsion handelt es sich um ein Gemenge aus einer Trägerflüssigkeit oder einem Dispersionsmedium und einer oder mehrerer darin nicht löslichen flüssigen Komponenten, welche auch als Additive oder disperse Phasen bezeichnet werden können.

Bei einer Suspension handelt es sich um ein Gemenge aus einer Trägerflüssigkeit oder einem Dispersionsmedium und einer oder mehrerer darin nicht löslicher fester Komponenten, welche auch als Additive oder disperse Phasen bezeichnet werden können.

Wenn es sich bei der Flüssigkeit um eine hydrophile Flüssigkeit, insbesondere Wasser handelt, wird das Additiv auch als hydrophobe Komponente bezeichnet. Derartige Gemische werden auch als Öl-in-Wasser-Emulsion bezeichnet.

Wenn es sich bei der Flüssigkeit um eine hydrophobe Flüssigkeit handelt, wird das Additiv auch als hydrophile Komponente bezeichnet. Derartige Gemische werden auch als Wasser-in-Öl-Emulsion bezeichnet.

Bei der Herstellung der Dispersion, insbesondere Emulsion oder Suspension, sind in zunehmendem Maße Partikel-, Agglomerat- und/oder Tröpfchengrößen des Additivs oder der dispersen Phase, insbesondere der hydrophoben Komponente, im Nanometer-Bereich bevorzugt, die sich besonders fein in der Dispersion verteilen. Trotzdem kann herkömmlich, insbesondere für langzeitstabile Dispersionen nicht auf Stabilisatoren, wie Tenside oder Emulgatoren, verzichtet werden, welche die Partikel oder Tröpfchen der hydrophoben Komponente oder hydrophilen Komponente umschließen oder an ihnen andocken und so die gegenseitige Anziehung der Partikel oder Tröpfchen infolge der Adhäsionkräfte und/oder Grenzflächeneffekte und/oder Grenzflächenspannung unterbinden oder zumindest sehr verzögern.

Die Anziehung der Partikel entsteht beispielsweise durch Van-der-Waals-Kräfte, Wasserstoffbrücken-Bindungen und/oder Anziehung von Ladungen und/oder Partialladungen auf den Partikeln. Die Abstoßung der Teilchen entsteht beispielsweise durch elektrostatische Abstoßung und/oder sterische Abstoßung und/oder elastische Abstoßung durch viskose Hüllen auf den Partikeln.

Stellvertretend für die vielfältigen Anwendungen von wasserbasierten Emulsionen seien Kraftstoff- und/oder Brennstoffemulsionen genannt. Solche mit Wasser bis zu 50% Anteil versetzte Kraftstoffe und/oder Brennstoffe stellen Versuche dar, zum einen den Kraft- oder Brennstoffverbrauch und zum anderen den Schadstoffausstoß zu senken.

DE 103 34 897 A1 beschreibt eine sogenannte Mikroemulsion und deren Verwendung als Kraftstoff, die ein Dreistoffgemisch darstellt, welches neben dem Wasser und dem Kraftstoff ein Gemisch aus nichtionischen Tensiden, ionischen Tensiden und Cotensiden aufweist.

Ferner werden Emulsionen in der Kosmetik und Medizin eingesetzt, wobei Tenside unerwünschte Nebenwirkungen hervorrufen können.

Die EP 1 216 958 A2 betrifft eine Alkali-dotierte, pyrogen hergestellte Siliciumdioxid-haltige wässrige Dispersion. Die EP 0 987 007 A2 betrifft Pickering-Emulsionen, die feindisperse Systeme vom Typ Wasser-in-Öl oder Öl-in-Wasser darstellen.

Aufgabe der vorliegenden Erfindung ist es, eine verbesserte stabile, vorzugsweise langzeitstabile Dispersion und ein Verfahren zur Herstellung der Dispersion anzugeben, wobei die Dispersion vorzugsweise keine oder nur sehr geringe Mengen an Stabilisator-Komponenten umfasst.

Unter dem Begriff Stabilisator-Komponente sind insbesondere Dispersionsmittel, wie beispielsweise Emulgatoren und/oder Suspendierhilfen, zu verstehen, welche die Grenzflächenspannung zwischen der Trägerflüssigkeit und der darin nicht löslichen Komponente herabsetzen und insbesondere eine Phasentrennung der Trägerflüssigkeit und der darin nicht löslichen Komponente verhindern oder verzögern.

Erfindungsgemäß wird diese Aufgabe durch eine Dispersion aus einer Trägerflüssigkeit, zum Beispiel Wasser, und mindestens einer in der Trägerflüssigkeit nicht löslichen Komponente, welche als gleichmäßig verteilte Tröpfchen und/oder Partikel und/oder Aggregate vorliegt, gelöst, wobei die Tröpfchengröße und/oder Partikelgröße und/oder Aggregatgröße von mindestens 68% der Tröpfchen und/oder Partikel und/oder Aggregate zwischen 1 nm bis 300 nm liegt, und wobei

die Tröpfchen und/oder Partikel und/oder Aggregate so in die Struktur der Trägerflüssigkeit eingebunden sind, daß zur Langzeitstabilisierung der Dispersion keine weitere Komponente als Stabilisator-Komponente erforderlich ist, wobei die Dispersion ein Zetapotential in einem Bereich von größer 15 mV aufweist, wobei das Zetapotential sowohl einen positiven als auch einen negativen Wert aufweisen kann.

Ferner wird diese Aufgabe erfindungsgemäß durch eine Dispersion, vorzugsweise eine kolloidale Dispersion, umfassend eine Trägerflüssigkeit und mindestens eine in der Trägerflüssigkeit nicht lösliche Komponente, welche als gleichmäßig verteilte Tröpfchen und/oder Partikel und/oder Aggregate vorliegt, gelöst, wobei die Dispersion weniger als 1 Gew.- %, vorzugsweise weniger als 0,1 Gew.- %, weiter bevorzugt weniger als 0,01 Gew.-% einer oder mehrerer Stabilisator-Komponenten, am meisten bevorzugt keine Stabilisator-Komponenten, bezogen auf die Gesamtmenge der Dispersion umfasst und wobei mindestens 70 Gew.-%, vorzugsweise mindestens 80 Gew.-%, weiter bevorzugt mindestens 95 Gew.-%, am meisten bevorzugt 100 Gew.-% der nicht löslichen Komponenten bezogen auf die Gesamtmenge der nicht löslichen Komponenten in Form von Tröpfchen und/oder Partikeln und/oder Aggregaten in einem Bereich von 0,1 bis 1000 nm, vorzugsweise in einem Bereich von 1 bis 500 nm vorliegen, und wobei vorzugsweise vorgesehen ist, daß die Dispersion bei einer Temperatur von 25°C eine Oberflächenspannung in einem Bereich von weniger als 30 mN/m, vorzugsweise in einem Bereich von 5 bis 15 mN/m, aufweist.

Die Oberflächenspannung kann beispielsweise nach dem Prinzip der spinningdrop-Tensiometrie, die von Vonnegut (B. Vonnegut, Rev. Sci.Instr.13,6 (1942)) entwickelt wurde, gemessen werden. Die Oberflächenspannung kann auch über Messung des Kontaktwinkels auf beispielsweise Glasoberflächen über die Young'sche Gleichung berechnet werden.

Bei einer Ausführungsform der erfindungsgemäßen Dispersion weist die Dispersion einen mittleren Kontaktwinkel von 10° bis 30°, vorzugsweise von 15° bis 20° auf.

Bei einer bevorzugten Ausführungsform weist die Dispersion einen Polydispersitätsindex von kleiner als 1, vorzugsweise von kleiner 0,3, weiter bevorzugt in einem Bereich von 0,1 bis 0,2 auf. Unter Polydispersitätsindex im Sinne der Erfindung ist vorzugsweise das Verhältnis aus gewichtmittlerer Molmasse/zahlenmittlerer Molmasse zu verstehen.

Erfindungsgemäß weist die Dispersion ein Zetapotential in einem Bereich von größer als +15 mV oder kleiner als -15 mV, vorzugsweise von größer als +25 mV oder kleiner als -25 mV auf. Vorzugsweise weist das Zetapotential einen negativen Wert auf.

Bei einer Ausführungsform weist die Dispersion eine Leitfähigkeit von weniger als 0,1 mS/cm, vorzugsweise von weniger als 0,01 mS/cm, auf.

Bei einer Ausführungsform weist die Dispersion einen pH-Wert von kleiner 7, vorzugsweise kleiner 4 auf.

Bei einer Ausführungsform weist die Dispersion eine Viskosität von 0,3 bis 2 mPas bei 25 °C auf. Die Viskosität kann beispielsweise mit einem Kapillarviskosimeter gemessen werden.

Bei einer Ausführungsform wird nur eine nicht lösliche Komponente zugesetzt.

Unter nicht-löslicher Komponente sind vorzugsweise Stoffe zu verstehen, die sich bei Zugabe zu der Trägerflüssigkeit nicht ohne Anwendung des erfindungsgemäßen Verfahrens mit der Trägerflüssigkeit mischen.

Bei einer Ausführungsform umfasst die erfindungsgemäße Dispersion kein Verdickungsmittel.

Bei einer Ausführungsform umfasst die erfindungsgemäße Dispersion keine hydrophobierten Partikel.

Unter Größe der Tröpfchen und/oder Größe der Partikel und/oder Größe der Aggregate wird der mittlere Durchmesser der Tröpfchen und/oder Partikel und/oder Aggregate verstanden.

Unter dem Begriff "kolloidale Dispersion" sind vorzugsweise Dispersionen zu verstehen, bei denen mindestens 70 Gew.-%, vorzugsweise mindestens 80 Gew.-%, weiter bevorzugt mindestens 95 Gew.-%, am meisten bevorzugt 100 Gew.-% der nicht löslichen Komponente, bezogen auf die Gesamtmenge der nicht löslichen Komponente, in Form von Tröpfchen und/oder Partikeln und/oder Aggregaten mit einer Größe in einem Bereich von 0,1 bis 500 nm, weiter bevorzugt in einem Bereich von 0,1 bis 300 nm, weiter bevorzugt in einem Bereich von 1 bis 100 nm, am meisten bevorzugt in einem Bereich von 10 bis 50 nm, vorliegen.

Bei einer Ausführungsform liegen mindestens 80 Gew.-%, vorzugsweise mindestens 95 Gew.-% am meisten bevorzugt 100 Gew.-% der nicht löslichen Komponente bezogen auf die Menge der nicht löslichen Komponente in Form von Tropfen, Partikeln und/oder Aggregaten mit einer Größe in einem Bereich von 20 bis 100 nm vor.

Unter dem Begriff "Aggregat" sind vorzugsweise Festkörper zu verstehen, die durch die Aggregation von mehreren Partikeln entstehen.

Die Trägerflüssigkeit kann auch als Dispersionsmedium bezeichnet werden. Die nicht lösliche Komponente kann auch als Additiv und/oder disperse Phase bezeichnet werden.

Vorzugsweise wird die Tröpfchenzahl und/oder Partikelzahl und/oder Agglomeratzahl ohne Berücksichtigung möglicherweise auftretender entmischter Phasen berechnet.

Bei einer Ausführungsform umfasst die erfindungsgemäße Dispersion eine hydrophile Trägerflüssikeit, in die eine hydrophobe Flüssigkeit dispergiert ist. Bei einer Ausführungsform handelt es sich bei der erfindungsgemäßen Dispersion um eine Öl-in-Wasser-Dispersion.

Bei einer anderen Ausführungsform umfasst die erfindungsgemäße Dispersion eine hydrophobe Trägerflüssigkeit, in die eine hydrophile Flüssigkeit dispergiert ist. Bei einer Ausführungsform handelt es sich bei der erfindungsgemäßen Dispersion um eine Wasser-in-Öl-Dispersion.

Bei einer Ausführungsform umfasst die erfindungsgemäße Dispersion weniger als 1 Gew.-%, vorzugsweise weniger als 0,1 Gew.-%, vorzugsweise weniger als 0,01 Gew.-% einer oder mehrerer Stabilisator-Komponenten bezogen auf das Gesamtgewicht der Dispersion. Vorzugsweise umfasst die erfindungsgemäße Dispersion keine Stabilisator-Komponente.

Vorzugsweise ist die erfindungsgemäße Dispersion bei Temperaturen in einem Bereich von -20°C bis 100°C stabil. Dies kann beispielsweise durch Einfrieren bei -20°C und Anschließendes Erhitzen auf 100°C überprüft werden.

Unter Stabilisator-Komponente im Sinne der Erfindung sind insbesondere Dispersionsmittel zu verstehen. Unter Dispersionsmittel werden insbesondere Substanzen verstanden, die die Entmischung der Trägerflüssigkeit und der darin dispergierten nicht löslichen Komponente über einen Zeitraum von mehr als 1 Tag, vorzugsweise mehr als 1 Monat, am meisten bevorzugt mehr als einem Jahr verhindern. Die erfindungsgemäße Dispersion kann beispielsweise bis zu 5 Jahre stabil sein. Unter Stabilität wird verstanden, daß keine Entmischung auftritt und die nicht lösliche Komponente in der Trägerflüssigkeit homogen verteilt bleibt. Zu den Dispersionsmittel gehören beispielsweise Emulgatoren, insbesondere anionische Emulgatoren, kationische Emulgatoren, amphotere Emulgatoren, nicht-ionische Emulgatoren, und/oder Suspendierhilfen oder Absetzungverhinderungshilfen. Zu den Dispergiermitteln gehören insbesondere auch Makromoleküle mit einem Molekulargewicht von insbesondere über 5000, welche die Dispersion verdicken und/oder grenzflächenaktive Eigenschaften aufweisen.

Bei einer Ausführungsform handelt sich bei der Stabilisator-Komponente um Glycerinfettsäureester, Phospholipide, z. B. Lecithin (Phosphatidylcholin), Polyethyleneglykolalkylether, Polyethylenglykolfettsäureester, Polyglycerolalkylether, Sacharosediester, Sphingolipide, Poly(oxyethylene)$_n$-sorbitan-monolaurat mit n vorzugsweise 20 oder 80, Octylphenolpoly(ethylenglycolether)$_n$ mit vorzugsweise n = 10 oder 7, Ethylphenolpoly(ethyleneglycolether)$_n$ mit vorzugsweise n = 11, Natriumcholat, Natriumdodecylsulfat und/oder C$_{10}$ bis C$_{30}$-Alkylacrylate quervernetzt mit Allylpentaerithrol.

Die Aufgabe wird durch ein Verfahren zur Herstellung einer Dispersion aus einer Trägerflüssigkeit oder Dispersionsmedium, beispielsweise Wasser, und einer in der Trägerflüssigkeit nicht löslichen Komponente, welche als gleichmäßig verteilte Tröpfchen und/oder Partikel und/oder Aggregaten vorliegt, gemäß Anspruch 7 gelöst.

Bei einer Ausführungsform des erfindungsgemäßen Verfahrens wird ein hydrophiles, flüssiges Dispersionsmedium, in das eine hydrophobe Flüssigkeit dispergiert wird, eingesetzt. Vorzugsweise wird Öl in eine wässrige Lösung dispergiert.

Bei einer weiteren Ausführungsform des erfindungsgemäßen Verfahrens wird ein hydrophobes, flüssiges Dispersionsmedium, in das eine hydrophile Flüssigkeit dispergiert wird, eingesetzt. Vorzugsweise wird eine wässerige Lösung in Öl dispergiert.

Beispielsweise sind für die Öl-in-Wasser-Emulsion als Öle Olivenöl, Avocadoöl, Jojobaöl, Lavendelöl, Alkane, z.B.Dodekan, und/oder Vitamin E geeignet. Bei einer Ausführungsform ist dem Öl Honig zugesetzt.

Bei einer Ausführungsform werden als in der Trägerflüssigkeit nicht lösliche Komponente Latexkügelchen, vorzugsweise mit einer Größe in einem Bereich von 400 bis 550 nm verwendet.

Bei einer anderen Ausführungsform werden als in der Trägerflüssigkeit nicht lösliche Komponente Metallpartikel, z.B. Goldpartikel, vorzugsweise mit einer Partikelgröße in einem Bereich von 50 nm bis 250nm, am meisten bevorzugt von 100 bis 200 nm, verwendet.

Bei einer Ausführungsform handelt es sich bei der in der Trägerflüssigkeit nichtlöslichen Komponente um Rußpartikel oder Quarzsand.

Bei einer Ausführungsform des erfindungsgemäßen Verfahrens oder der erfindungsgemäßen Dispersion beträgt die Menge an Trägerflüssigkeit oder Dispersionsmedium 50 bis 99 Gew.-%, vorzugsweise 50 bits 97 Gew.-%, weiter bevorzugt von 50 bis 80 Gew.-%, bezogen auf die Gesamtmenge der Dispersion. Bei einer bevorzugten Ausführungsform des erfindungsgemäßen Verfahrens oder der erfindungsgemäßen Dispersion beträgt die Menge an Trägerflüssigkeit oder Dispersionsmedium 95 Gew.-% bis 97 Gew.-%, bezogen auf die Gesamtmenge der Dispersion. Bei einer weiteren Ausführungsform beträgt die Menge an Trägerflüssigkeit oder Dispersionsmedium mindestens 98 Gew.-%, vorzugsweise mindestens 99 Gew.-%, bezogen auf die Gesamtmenge an Dispersion.

Ferner ist vorgesehen, daß die Dispersion unter Anlegen von Vakuum mit Hilfe eines ersten rotierenden Wirbels und/oder eines zweiten rotierenden Wirbels, der den ersten Wirbel umgibt, homogenisiert wird, und daß Cluster-Strukturen und/oder Aggregatstrukturen der in der Trägerflüssigkeit nicht löslichen Komponente durch Kavitation aufgebrochen werden. Vorzugsweise weisen die rotierenden Wirbel eine umgekehrte Drehrichtung auf.

Bei einer Ausführungsform wird die Temperatur bei der Durchführung des erfindungsgemäßen Verfahrens in einem Bereich von 0°C bis 15°C, vorzugsweise 0°C bis 10°C gehalten, wobei die Temperatur so eingestellt wird, daß die Temperatur über dem Gefrierpunkt der Dispersion liegt.

Bei einer Ausführungsform des erfindungsgemäßen Verfahrens wird zunächst die Trägerflüssigkeit, z.B. Wasser, homogenisiert und anschließend die in der Trägerflüssigkeit unlösliche Komponente in einen der beiden rotierenden Wirbel eingesprüht.

Weiter wird ein Verfahren zur Herstellung einer Dispersion, insbesondere Nano-Dispersion aus einer Flüssigkeit und mindestens einem festen und/oder flüssigen Additiv angegeben. Die Dispersion, insbesondere Nano-Dispersion, die insbesondere durch das erfindungsgemäße Verfahren hergestellt wird, kann ausgestaltet sein wie die vorangehende erfindungsgemäße Dispersion. Das bedeutet insbesondere, daß die bei der erfindungsgemäßen Dispersion verwendeten Stoffe und Mengen auch bei dem erfindungsgemäßen Verfahren eingesetzt werden können. Bei dem festen oder flüssigen Additiv handelt es sich um die in der Trägerflüssigkeit nicht lösliche Komponente.

Das Herstellungsverfahren sieht insbesondere vor, daß während des Herstellungsprozesses die gebildete Dispersion in einem geschlossenen rotationssymmetrischen Gehäuse, das einen rotationssymmetrischen Innentubus aufweist, mit einer mit einem Rotor ausgebildeten Umwälzeinrichtung in einem Kreislauf im Innern des Innentubus in einem rotierenden Wirbel von oben nach unten fließend und im Zwischenraum zwischen Außenwandung des Innentubus und Innenwandung des Gehäuses in einem rotierenden Wirbel mit umgekehrter Drehrichtung von unten nach oben fließend umgewälzt wird, wobei vorgesehen ist, daß die Dispersion in einem ersten Kreislaufabschnitt, in der sie mit einem ersten Abschnitt des Rotors zusammenwirkt, homogenisiert wird, wobei die Drehzahl des Rotors so eingestellt ist, daß die Cluster-Strukturen des Additivs und/oder der Trägerflüssigkeit im wesentlichen durch Kavitation aufgebrochen werden, und daß die Drehrichtung der Dispersion in einem stromabwärts folgenden zweiten Kreislaufabschnitt umgekehrt wird, und daß das Additiv im ersten Kreislaufabschnitt oder in dem stromaufwärts benachbarten Kreislaufabschnitt unter Druck eingesprüht wird.

Bei einer Ausführungsform wird die nicht lösliche Komponente mittels eines Sprühvorrichtung in den Innentubus, vorzugsweise in das untere Ende des oberen Drittels des Innentubus eingesprüht.

Bei einer Ausführungsform des erfindungsgemäßen Verfahrens beträgt die Umfangsgeschwindigkeit des Rotors mehr als 50 m/s, wobei der Umfang des Rotors vorzugsweise in einem Bereich von 20 bis 30 cm liegt. Bei einer Ausführungsform des erfindungsgemäßen Verfahrens liegt die Umfangsgeschwindigkeit des Rotors in einem Bereich von 50 m/s bis 500 m/s, vorzugsweise von 50 m/s bis 300 m/s, am meisten bevorzugt von 50 bis 100 m/s, wobei der Umfang des Rotors vorzugsweise in einem Bereich von 20 bis 30 cm liegt.

Bei einer Ausführungsform wird die Drehzahl des Rotors durch folgende Formel bestimmt:

$$n \, [\min^{-1}] = 1{,}64 \times 10^5 / d \, [cm],$$

wobei n die Drehzahl ist und d der Rotordurchmesser ist.

Beispielsweise beträgt bei einem Rotordurchmesser von 5 cm die Drehzahl 32.800 min$^{-1}$.

Vorzugsweise liegt die Drehzahl des Rotors über 6600 U/min.

Bei einer Ausführungsform liegt die Drehzahl des Rotors in einem Bereich von 30.000 bis 40.000 U/min bei einem Rotordurchmesser von 4 bis 6 cm.

Bei einer Ausführungsform der erfindungsgemäßen Dispersion liegt die Tröpfchen- und/oder Partikelgröße und/oder Agglomeratgröße von mindestens 68% der Tröpfchen und/oder der Partikel und/oder der Agglomerate der in der Trägerflüssigkeit nicht löslichen Komponente im unteren Drittel des Nanometer-Bereichs zwischen 0,1 nm bis 1000 nm, vorzugsweise 0,1 bis 500 nm, am meisten bevorzugt 1 nm und 300 nm.

Wenn als Trägerflüssigkeit eine hydrophile Flüssigkeit, beispielsweise Wasser, vorgesehen ist, handelt es sich bei der in der Trägerflüssigkeit nicht löslichen Komponente um eine hydrophobe Komponente. Die an den Tröpfchen und/oder Partikeln und/oder Agglomeraten auftretenden Grenzflächenkräfte sind zum einen durch die geringe Tröpfchen- und/oder Partikelgröße und/oder Agglomeratgröße reduziert, und zum anderen sind die Tröpfchen und/oder Partikel optimal in die Struktur der Trägerflüssigkeit, beispielsweise in die Wasserstruktur eingebunden. Es ist also nicht notwendig, der erfindungsgemäßen Dispersion einen weiteren Stoff als Stabilisator-Komponente beizumischen, um die Dispersion herstellen zu können und/oder langzeitstabil zu machen. Es können jedoch Stabilisator-Komponenten zugemischt werden. Wenn es sich bei der Trägerflüssigkeit um Wasser handelt, wird der als Stabilisator-Komponente wirkende weitere Stoff auch als amphiphiler Stoff bezeichnet. Die u.a. auch als Tenside oder Emulgatoren bezeichneten amphiphilen Stoffe bestehen allgemein aus einem hydrophoben, wasserabweisenden Kohlenwasserstoffrest und einem hydrophilen, in Wasser löslichen Molekülteil. Kommen sie nun mit Wasser in Berührung, richten sich die einzelnen Moleküle des amphiphilen Stoffs so aus, daß der wasserabweisende Teil sich mit den Molekülen der hydrophoben Komponente der Dispersion zusammenlagert und der wasserlösliche Rest im Wasser solubilisiert, d.h. sich im Wasser löst.

Durch den Verzicht auf die Stabilisator-Komponente können insbesondere im kosmetischen, pharmazeutischen und medizinischen Bereich neue Anwendungsfälle erschlossen werden. Kosmetika und/oder Medikamente, die als erfindungsgemäße Dispersion ohne jeden Zusatzstoff ausgebildet sind, d.h. nur aus dem kosmetischen und/oder pharmazeutischen Wirkstoff und Wasser bestehen, sind frei von Nebenwirkungen, die durch die Stabilisator-Komponente hervorgerufen sein können. Wenn keine Stabilisator-Komponente vorgesehen ist, ergibt sich eine Verkürzung des Zulassungsprozesses, wenn für den kosmetischen und/oder pharmazeutischen Wirkstoff bereits eine Zulassung erteilt ist. Bei einer Ausführungsform besteht die erfindungsgemäße Dispersion aus einer Trägerflüssigkeit und einer in der Trägerflüssigkeit nicht löslichen Komponente sowie dem kosmetischen und/oder pharmazeutischen Wirkstoff, enthält aber kein Dispersionsmittel.

Das erfindungsgemäße Verfahren zeichnet sich dadurch aus, daß durch eine spezielle Wirbelbildung und durch Nutzung von Kavitationskräften die beim Mischen der Dispersion aufgewendete Energie auf das Aufbrechen der Cluster der in der Trägerflüssigkeit nicht löslichen Komponente der Dispersion konzentriert wird und die Tröpfchen und/oder Partikel der in der Trägerflüssigkeit nicht löslichen Komponente so in die Matrix der Trägerflüssigkeit eingebunden werden, daß die Dispersion langzeitstabil ist.

Als langzeitstabil werden im allgemeinen Dispersionen bezeichnet, die ein Jahr oder länger haltbar sind, d.h. in diesem Zeitraum die Eigenschaften, insbesondere die Tröpfchen und/oder Partikelgröße und/oder Agglomeratgröße, im wesentlichen beibehalten, die sie unmittelbar nach ihrer Herstellung hatten. Der Zeitraum kann jedoch auch kürzer sein, sofern in dieser Zeit die Dispersion abgefüllt, in Umlauf gebracht und/oder zwischengelagert und verwendet ist. Ein solch kürzerer Zeitraum kann beispielsweise für Dispersionen vorgesehen sein, die einen pharmazeutischen Wirkstoff enthalten und die nach ärztlicher Verschreibung hergestellt und verwendet werden. Zur Abgrenzung von diesen über mehr oder weniger lange Zeit zumindest bis zum vorgesehenen Zeitpunkt ihrer Anwendung stabilen Dispersionen sind Dispersionen zu sehen, die ausschließlich während ihrer Entstehung, also gewissermaßen nur "in situ"-beständig sind.

Bei einer Ausführungsform beträgt die Stabilität oder die Langzeitstabilität der erfindungsgemäßen Dispersion 5 Minuten bis 5 Jahre, vorzugsweise 1 Jahr bis 5 Jahre, am meisten bevorzugt 3 bis 5 Jahre. Stabilität oder Langzeitstabilität bedeutet in diesem Zusammenhang vorzugsweise, daß sich die Größe der Tröpfchen und/oder Partikel und/oder Agglomerate der in der Trägerflüssigkeit nicht löslichen Komponente in dem angegebenen Zeitraum um weniger als den Faktor 2, vorzugsweise weniger als den Faktor 1,5 verändert.

Der Rotor der für die Herstellung der erfindungsgemäßen Dispersion vorgesehenen Vorrichtung dreht sich entgegengesetzt zur Drehrichtung der wirbelnden Dispersion, so daß die Relativgeschwindigkeit zwischen der Dispersion und den Kanten des Rotorblätter sehr hoch ist und vorzugsweise Superkavitation eintritt.

Bei einer Ausführungsform sind die Rotorblätter kreissegmentförmig ausgebildet und/oder die Vorderkanten der Rotorblätter sind messerförmig ausgebildet.

Kavitation ist ein Effekt, der in bewegten Flüssigkeiten beobachtet wird, wenn der hydrostatische Druck in der bewegten Flüssigkeit lokal auf einen Wert absinkt, der in etwa dem Dampfdruck der Flüssigkeit entspricht. Es bilden sich dann kleine mit Dampf gefüllte Blasen, die mit der strömenden Flüssigkeit schließlich in Bereiche höheren Drucks gelangen und dort zusammenstürzen. Bei der Blasenimplosion entstehen im Innern der Blase und in ihrer näheren Umgebung hohe Druckspitzen, die das Aufbrechen der Cluster der in der Trägerflüssigkeit nicht löslichen Komponente bewirken. Unter der in dem erfindungsgemäßen Verfahren bevorzugten Superkavitation wird die Ausbildung eines zusammenhängenden Kavitationsbereichs hinter den angeströmten Rotorblättern verstanden.

Bei einer Ausführungsform wird ein Unterdruck in einem Bereich von 900 mbar bis 600 mbar angelegt. Durch das Anlegen von Vakuum kann das Einsetzen der Kavitation in gewissen Grenzen beeinflußt werden. Ein weiterer positiver Effekt ist darin zu sehen, daß die Dispersion entgast wird. Die Cluster-Strukturen und/oder die Aggregate der in der Trägerflüssigkeit nicht löslichen Komponente können beispielsweise durch das Zusammenklumpen fester Partikel gebildet sein oder es kann sich um große zusammenhängende Flüssigkeitströpfchen handeln. Rußpartikel können beispielsweise fadenförmige Cluster bilden, die in einem herkömmlichen Rührprozeß nicht hinreichend aufgebrochen werden können, weshalb in herkömmlichen Verfahren ein Tensid und/oder Emulgator hinzugegeben wird.

Dadurch, daß zwei von einander getrennte Wirbel vorgesehen sind, die mit entgegengesetzter Drehrichtung rotieren, ist das Verfahren sowohl für das effektive Aufbrechen der Cluster der in der Trägerflüssigkeit nicht löslichen Komponente als auch für die Förderung der Dispersion optimierbar. Die Umwälzgeschwindigkeit der Dispersion kann an die Viskosität der Dispersion und an die Drehzahl des Rotors angepaßt werden.

Weiter kann vorteilhafterweise die Wirbelgeschwindigkeit des inneren und des äußeren Wirbels relativ unabhängig voneinander verändert werden und so Einfluß auf die optimale Verteilung der aus der in der Trägerflüssigkeit nicht löslichen Komponente gewonnenen Nano-Tröpfchen und/oder Nano-Partikel und/oder Nanao-Aggregate in der Trägerflüssigkeit genommen werden. Die Nano-Tröpfchen und/oder Nano-Partikel und/oder Nano-Aggregate können durch das erfindungsgemäße Verfahren in die Matrix der Trägerflüssigkeit so eingebunden werden, daß eine besonders haltbare und stabile, insbesondere langzeitstabile Dispersion, gebildet wird.

Weitere vorteilhafte Ausgestaltungen sind in weiteren Unteransprüchen bezeichnet.

Es kann vorgesehen sein, daß die Tröpfchengröße und/oder Partikelgröße und/oder Aggregatgröße von mindestens 68% der Tröpfchen und/oder Partikel und/oder Aggregate der in der Trägerflüssigkeit nicht löslichen Komponente zwischen 1 nm bis 100 nm liegt.

In einer weiteren vorteilhaften Ausgestaltung kann vorgesehen sein, daß die Tröpfchengröße und/oder Partikelgröße und/oder Aggregatgröße von mindestens 68% der Tröpfchen und/oder Partikel und/oder Aggregate der in der Trägerflüssigkeit nicht löslichen Komponente zwischen 10 nm bis 50 nm liegt.

Weiter kann vorgesehen sein, daß die Tröpfchengröße und/oder Partikelgröße und/oder Aggregatgröße von mindestens 80% der Tröpfchen und/oder Partikel und/oder Aggregate der in der Trägerflüssigkeit nicht löslichen Komponente zwischen 1 nm bis 100 nm liegt.

Noch weiter kann vorgesehen sein, daß die Tröpfchengröße und/oder Partikelgröße und/oder Aggregatgröße von mindestens 95% der Tröpfchen und/oder Partikel und/oder Aggregate der in der Trägerflüssigkeit nicht löslichen Komponente zwischen 1 nm bis 100 nm liegt.

Bei einer Ausführungsform umfasst die erfindungsgemäße Dispersion, welche vorzugsweise eine kolloid-disperse Dispersion ist, ein Dispersionsmedium und eine in dem Dispersionsmedium nicht lösliche Komponente, welche als dispergierte Tröpfchen und/oder Partikel und/oder Aggregate vorliegt, mit der Maßgabe, daß mindestens 70 Gew.-%, vorzugsweise mindestens 95 Gew.-%, am meisten bevorzugt 100 Gew.-% der nicht löslichen Komponente, bezogen auf das Gesamtgewicht der nicht löslichen Komponente, in Form von Tröpfchen und/oder Partikeln und/oder Aggregaten in einem Bereich von 1 bis 100 nm, vorzugsweise in einem Bereich von 1 bis 50 nm, am meisten bevorzugt in einem Bereich von 10 bis 50 nm, vorliegt und daß die Tröpfchen und/oder Partikel und/oder Aggregate so in die Struktur der Trägerflüssigkeit eingebunden sind, daß zur Stabilisierung, vorzugsweise Langzeitstabilisierung, der Dispersion keine weitere Komponente als Stabilisator-Komponente erforderlich ist.

Ein zur Herstellung der erfindungsgemäßen Dispersion in das Wasser gegebene Feststoff sollte in etwa die Partikelgröße aufweisen, die er in der Dispersion haben soll. Die Cluster fester Stoffe, deren Partikel durch Adhäsion und/oder ihre Oberflächenbeschaffenheit Cluster bilden, können durch das angegebene Verfahren so aufgebrochen werden, daß in der Dispersion nur noch gleichmäßig verteilte einzelne, durch Kavitation oder Superkavitation nicht weiter teilbare Partikel vorliegen.

Die Tröpfchen von Flüssigkeiten hingegen können durch das erfindungsgemäße Verfahren bis zu der gewünschten Größe aufgebrochen werden, wobei die Viskosität der Flüssigkeit und/oder die Molkülgröße der Flüssigkeit die untere Tröpfchengröße bestimmen kann und/oder eine untere Grenze der Tröpfchengröße für das Aufbrechen der Flüssigkeitströpfchen durch Kavitation oder Superkavitation setzen kann.

In weiteren vorteilhaften Ausgestaltungen kann vorgesehen sein, daß die Tröpfchen- und/oder Partikelgröße und/oder Aggregatgröße von mindestens 68% der Tröpfchen und/oder Partikel und/oder Aggregate der in der Trägerflüssigkeit nicht löslichen Komponente zwischen 10 nm bis 50 nm liegt.

Weiter kann vorgesehen sein, daß die Tröpfchengröße und/oder Partikelgröße und/oder Aggregatgröße von mindestens 80% der Tröpfchen und/oder Partikel der in der Trägerflüssigkeit nicht löslichen Komponente zwischen 10 nm bis 50 nm liegt.

Noch weiter kann vorgesehen sein, daß die Tröpfchengröße und/oder Partikelgröße und/oder Aggregatgröße von mindestens 95% der Tröpfchen und/oder Partikel und/oder Aggregate der in der Trägerflüssigkeit nicht löslichen Komponente zwischen 10 nm bis 50 nm liegt.

Die Tröpfchen- und/oder Partikelgröße und/oder Aggregatgröße ist in den vorstehend genannten Ausbildungen nach einer Gaußschen Normalverteilung verlaufend angenommen vvorden oder zumindestens als annähernd normalverteilt. Es können aber auch nicht normalverteilte Tröpfchen- und/oder Partikelgrößen vorliegen. Bei einer Ausführungsform wird die Tröpfchen- und/oder Partikelgröße und/oder Agglomeratgröße durch Photonenkorrelationsspetroskopie oder mittels dynamischer Lichtstreuung (J. Springer, Einführung in die Theorie der dynamischen Lichtstreuung verdünnter Lösungen großer Moleküle, Applied Research Laboratories (1970)) bestimmt.

Es kann im Falle, daß es sich bei der Trägerflüssigkeit um Wasser handelt, vorgesehen sein, daß die Stabilisator-Komponente eine amphiphile stoffliche Komponente ist, die zusätzlich zur hydrophoben Komponente der Dispersion zugegeben ist. Bei der Stabilisator-Komponente kann es sich auch um eine stoffliche Komponente handeln, die primär eine andere Funktion erfüllt, beispielsweise die Ausbildung eines angenehmen Geruchs bewirkt. Dieser Stoff kann beispielsweise so ausgebildet sein, daß er bei entsprechender Konzentration zugleich die Dispersion zu stabilisieren vermag.

Es kann vorgesehen sein, daß die Stabilisator-Komponente ein Tensid aufweist oder als Tensid ausgebildet ist.

Bei einer Ausführungsform werden bei dem erfindungsgemäßen Verfahren weniger als 0,1 Gew.-%, vorzugsweise weniger als 0,01 Gew.-%, einer oder mehrerer Stabilisator-Komponenten bezogen auf das Gesamtgewicht der Dispersion eingesetzt. Vorzugsweise werden bei dem erfindungsgemäße Dispersion keine Stabilisator-Komponenten zugesetzt und/oder sind darin entfalten.

Bei einer Ausführungsform des erfindungsgemäßen Verfahrens werden die Trägerflüssigkeit und die darin nicht lösliche Komponente für einen Zeitraum von 1 min bis 1 h, vorzugsweise 1 min bis 15 min, homogenisiert.

Weitere Ausgestaltungen beziehen sich auf die Ausbildung der in der Trägerflüssigkeit nicht löslichen Komponente der erfindungsgemäßen Dispersion.

Es kann vorgesehen sein, daß die in der Trägerflüssigkeit nicht lösliche Komponente oder die Trägerflüssigkeit mindestens einen als Kraftstoff oder Brennstoff einsetzbaren Stoff oder ein Gemisch aus solchen Stoffen enthält.

Das Zumischen von Wasser zu Kraftstoffen oder Brennstoffen wird seit Jahren erprobt, doch ist bisher die Zugabe eines Tensids und/oder Emulgators unverzichtbar, sofern nicht die Direkteinspritzung von Wasser in den Verbrennungsraum vorgesehen ist. Auch wenn in einer solchen Dispersion der Anteil der hydrophoben Komponente höher sein kann als der Anteil der Trägerflüssigkeit Wasser, so handelt es sich doch in jedem Fall um eine Dispersion der vorbeschriebenen Art. Die Auswahl eines geeigneten Tensids und/oder Emulgators ist mit einem hohen Forschungsaufwand verbunden und die Verbrennung des dem Kraftstoff oder Brennstoff beigefügten Tensids kann ökologisch bedenklich sein. Die erfindungsgemäße Dispersion vermeidet die genannten Nachteile, indem sie ein Zweistoffgemisch aus Wasser und Kraftstoff oder Brennstoff bereitstellt, das wie der unbehandelte Kraftstoff oder Brennstoff gelagert, vertrieben und verwendet werden kann. Es kann beispielsweise eine kraftstoff- oder brennstoffhaltige Dispersion mit einem Wasseranteil von 50% hergestellt werden.

Weitere vorteilhafte Ausgestaltungen beziehen sich auf die Art der beigemischten Kraftstoffe oder Brennstoffe.

Es kann vorgesehen sein, daß es sich bei mindestens einem der Kraftstoffe oder Brennstoffe um Ottokraftstoff oder Dieselkraftstoff oder Kerosin oder Schweröl oder Heizöl handelt.

Wie Versuche gezeigt haben, kann auch vorgesehen sein, daß es sich bei mindestens einem der Kraftstoffe oder Brennstoffe um einen festen Kraftstoff oder Brennstoff handelt. Beispielsweise wurde erfolgreich eine langzeitstabile Flammruß-Dispersion hergestellt. Eine herkömmlich mittels Ultraschall verwirbelte Flammruß-Dispersion wies dagegen makroskopische Verklumpungen aus Rußpartikeln auf und bildete im Ruhezustand sehr rasch Sedimentablagerungen. Die erfindungsgemäße Flammruß-Dispersion stellte sich dagegen als homogen eingefärbte Flüssigkeit dar, in der die Rußpartikel nur unter dem Elektronenmikroskop wahrnehmbar sind.

Weiter kann vorgesehen sein, daß die in der Trägerflüssigkeit nicht lösliche Komponente mindestens einen Kraftstoff oder Brennstoff auf Mineralölbasis enthält.

Es kann auch vorgesehen sein, daß die in der Trägerflüssigkeit nicht lösliche Komponente mindestens einen aus pflanzlichen Ölen und/oder Fetten und/oder tierischen Ölen und/oder Fetten gebildeten Kraftstoff oder Brennstoff enthält. Diese Ausführungsvariante zeichnet sich unter anderem dadurch aus, daß sie das Spektrum der möglichen Ausgangsstoffe für die Herstellung erneuerbarer, d.h. nichtfossiler Kraftstoffe oder Brennstoffe auf bisher dafür nicht verwertbare Ausgangsstoffe erweitert.

In einer vorteilhaften Ausgestaltung kann vorgesehen sein, daß es sich bei mindestens einem der Kraftstoffe oder Brennstoffe um Rapsölmethylester handelt oder daß mindestens einer der Kraftstoffe oder Brennstoffe Rapsölmethylester enthält.

Weiter kann vorgesehen sein, daß die in der Trägerflüssigkeit nicht lösliche Komponente ein pharmazeutischer Wirkstoff ist und/oder der pharmazeutische Wirkstoff in der in der Trägerflüssigkeit nicht löslichen Komponente gelöst ist. Eine Reihe pharmazeutischer Wirkstoffe kann bisher nicht intravenös verabreicht werden oder muß in Stoffen gelöst oder dispergiert werden, die unerwünschte Nebenwirkungen aufweisen können. Die erfindungsgemäße Dispersion weist diesen Nachteil nicht auf und ist ohne Zugabe von Tensiden und/oder Emulgatoren herstellbar. Die feinverteilten Nano-Tröpfchen und/oder Nano-Partikel der pharmazeutischen Wirkstoffe können besonders gut vom menschlichen oder tierischen Körper aufgenommen werden. Es ist auf diese Weise auch möglich, speziell designte Nano-Wirkstoffe in die Dispersion einzufügen, d.h. Wirkstoffe, die in einem chemischen Verfahren nicht darstellbar sind. Beispielsweise kann es sich um Nano-Strukturen handeln, die analog zu Blutkörperchen Sauerstoff aufzunehmen und abzugeben vermögen. Es kann weiter vorgesehen sein, daß es sich bei der in der Trägerflüssigkeit nicht löslichen Komponente um eine Wirkstoffkombination handelt, d.h. um eine Kombination aus mehr als einem pharmazeutischen Wirkstoff.

Es kann auch vorgesehen sein, daß die in der Trägerflüssigkeit nicht lösliche Komponente ein kosmetischer Wirkstoff ist und/oder der kosmetische Wirkstoff in der in der Trägerflüssigkeit nicht löslichen Komponente gelöst ist. Durch den Verzicht auf das Tensid und/oder den Emulgator und die Verwendung von Nano-Partikeln und/oder Nanotröpfchen und/oder Nanoaggregaten wird die erfindungsgemäße Dispersion besonders gut von der Haut aufgenommen. Eine erfindungsgemäße Avocadoöl-Emulsion hinterläßt beispielsweise keine öligen Rückstände auf der Haut und wird unmittelbar beim Auftragen von der Haut aufgenommen und entfaltet fast augenblicklich ihre kosmetische Wirkung.

In einer weiteren vorteilhaften Ausgestaltung ist vorgesehen, daß die in der Trägerflüssigkeit nicht lösliche Komponente ein Lebensmittel und/oder ein Lebensmittel-Zusatzstoff (beispielsweise ein Geschmacksstoff oder ein Austauschstoff für Fett oder Öl) und/oder ein technologischer Hilfsstoff zur Herstellung von Lebensmitteln ist und/oder das Lebensmittel und/oder der Lebensmittelzusatzstoff und/oder der technologische Hilfsstoff zur Herstellung von Lebensmitteln in der in der Trägerflüssigkeit nicht löslichen Komponente gelöst ist.

Emulsionen werden zur Herstellung von Lebensmitteln in breitem Maße verwendet, doch ist bisher die Verwendung von Emulgatoren vorgesehen. Wo es jedoch nicht auf die geschmackliche Eigenart oder andere Eigenschaften des Emulgators ankommt, kann die erfindungsgemäße Dispersion von besonderem Vorteil sein. Sie ist insbesondere dann von Vorteil, wenn ein geeigneter Emulgator bisher nicht verfügbar ist.

Weiter kann vorgesehen sein, daß die in der Trägerflüssigkeit nicht lösliche Komponente ein Pigment oder ein Farbpigment ist und/oder das Pigment und/oder das Farbpigment in der in der Trägerflüssigkeit nicht löslichen Komponente gelöst ist. Das Pigment und/oder Farbpigment kann zum Beispiel Gold oder Aluminium sein. Häufig werden heute solche metallische Pigmente, wie Gold oder Aluminium in Farben verwendet, um lichtechte Farben oder Effektfarben herzustellen. Bei einer Ausführungsform der erfindungsgemäßen Dispersion wird Gold zur Verfeinerung von Lebensmitteln, wie Likören ("Danziger Goldwasser") oder Pralinen verwendet.

In einer weiteren Ausführung ist vorgesehen, daß die in der Trägerflüssigkeit nicht lösliche Komponente ein technologischer Hilfsstoff oder Ausgangsstoff oder ein Zwischenprodukt für die Herstellung eines Endproduktes ist. Es kann sich bei der Dispersion beispielsweise um Bohrmilch handeln oder um eine Emulsion, aus der eine Oberflächenbeschichtung abgeschieden wird. Dabei kann vorgesehen sein, daß die hydrophobe Komponente die Beschichtung bildet und Wasser als Trägerflüssigkeit einen technologischen Effekt auslöst, beispielsweise eine erhitzte Werkstückoberfläche abschreckt.

Weitere vorteilhafte Ausführungen sind auf die Verwendung der erfindungsgemäßen Dispersion gerichtet.

Es kann die Verwendung der Dispersion als Kraftstoff oder Brennstoff vorgesehen sein und zwar als Energieträger, die durch chemische Umsetzung mit Sauerstoff Energie freisetzen. Der Einsatz kommt zum Beispiel in Verbrennungskraftmaschinen oder Schubtriebwerken oder Feuerungsanlagen in Frage. Die Vorteile eines solchen Kraftstoffs oder Brennstoffs sind weiter oben ausführlich beschrieben. Es kann insbesondere bei Antrieben von Lastkraftwagen, Lokomotiven, Großgeräten, wie beispielsweise Baggern, und Schiffen vorgesehen sein, die erfindungsgemäße Dispersion als Brennstoff vor Ort herzustellen, wenn Wasser an Ort und Stelle bereitgestellt werden kann. Auch für Heizungsanlagen von Gebäuden kann vorgesehen sein, die erfindungsgemäße Dispersion vor Ort zu erzeugen, weil auf diese Weise die Transportkosten für das Wasser vermieden werden. Eine besondere Bedeutung erlangt die Verwendung der Dispersion für Motoren und/oder Turbinen in Flugzeugen, weil damit die Umweltverträglichkeit der Flugzeuge erhöht werden kann.

In weiteren Ausführungen ist die Verwendung der Dispersion als Arzneimittel oder als Arzneipflegemittel oder als kosmetisches Präparat vorgesehen. Die Vorteile sind bereits weiter oben genannt.

Es kann weiter die Verwendung der Dispersion als Lebensmittel oder als Lebensmittel-Zusatzstoff vorgesehen sein. So können beispielsweise neuartige Getränke erzeugt werden, deren Zusatzstoffe nicht wasserlöslich sind. Wie weiter oben beschrieben, kann es sich bei dem Lebensmittelzusatzstoff beispielsweise auch um einen Austauschstoff für Fett oder Öl handeln, um besonders "leichte" Lebensmittel herzustellen.

Weiter kann die Verwendung der Dispersion als Tinte für Drucker und/oder Plotter und/oder Schreibgeräte vorgesehen sein. Der Einsatz solcher Tinten in Tintenstrahldruckern erlaubt beispielsweise eine weitere Reduzierung der Tröpfchengröße und damit feinere Ausdrucke bei sinkendem Tintenverbrauch.

Als weitere Verwendung kann die Dispersion als druckbarer Werkstoff vorgesehen sein.

Die äußerst geringe Größe der in der Dispersion enthaltenen Partikel und/oder Tröpfchen ermöglicht die Ausbildung besonders homogener und dünner Schichten auf beliebigen Oberflächen.

Es kann auch die Verwendung der Dispersion als Kühlstoff oder Schmierstoff vorgesehen sein. Auch in dieser Verwendung sind die geringen Herstellungskosten und die geringe Tröpfchengröße und/oder Partikelgröße von besonderem Vorteil.

Weitere vorteilhafte Ausgestaltungen beziehen sich auf das Verfahren zur Herstellung der Dispersion.

Es kann vorgesehen sein, daß die Cluster-Strukturen der in der Trägerflüssigkeit nicht löslichen Komponente am Ende des einen Wirbels durch hinter Rotorblättern eines im anderen Wirbel entgegengesetzt zu diesem Wirbel rotierenden Rotors auftretende Kavitation aufgebrochen werden.

Unter Clusterstrukturen im Sinne der vorliegenden Erfindung sind vorzugsweise Aggregate aus Feststoffpartikeln und/oder Ansammlungen von Flüssigkeitsmolekülen insbesondere mit einer Nahordnung zu verstehen, die aufgebrochen werden.

In einer weiteren vorteilhaften Ausgestaltung kann vorgesehen sein, daß die Tröpfchen und/oder Partikel und/oder Aggregate durch Kavitation zu mindestens 68% zu Nano-Tröpfchen und/oder Nano-Partiketn und/oder Nano-Aggregaten < 300 nm aufgebrochen werden.

Es kann weiter vorgesehen sein, daß die Tröpfchen und/oder Partikel und/oder Aggregate durch Kavitation zu mindestens 68% zu Nano-Tröpfchen und/oder Nano-Partikeln und/oder Nano-Aggregate < 100 nm aufgebrochen werden.

In einer weiteren vorteilhaften Ausführung kann vorgesehen sein, daß die Tröpfchen und/oder Partikel und/oder Aggregate durch Kavitation zu mindestens 68% zu Nano-Tröpfchen und/oder Nano-Partikeln und/oder Nano-Aggregate < 50 nm aufgebrochen werden.

Es kann vorgesehen sein, daß es sich bei der Kavitation um Superkavitation handelt. Bei der Superkavitation tritt ein zusammenhängender Bereich von Kavitations-Dampfblasen auf, der bei seiner Implosion eine besonders große Energiemenge in Sekundenbruchteilen freisetzt, welche das Aufbrechen der in diesem Bereich anzutreffenden Cluster der hydrophoben Komponente bewirkt.

Es kann vorgesehen sein, daß die Rotorblätter des Rotors (14) eine mittlere Umfangsgeschwindigkeit von > 50 m/s aufweisen. Die Vorderkanten der Rotorblätter können so dimensioniert werden, daß sie einen kleinen Strömungswiderstand aufweisen, denn sie müssen keinen Beitrag zum Zertrümmern der Cluster leisten, die wie vorstehend beschrieben, durch die Wirkung der hinter den Rotorblättern eintretenden Kavitation, insbesondere Superkavitation, aufgebrochen werden.

Es kann vorgesehen sein, daß die in der Trägerflüssigkeit nicht lösliche Komponente im unteren Abschnitt des ersten Wirbels in das Zentrum des ersten Wirbels oder in den zweiten Wirbel unter Druck eingesprüht wird.

Es kann weiter vorgesehen sein, daß die Drehzahl des Rotors und/oder der Gasdruck über der Dispersion und/oder die Temperatur der Dispersion eingestellt und/oder geregelt werden und/oder wird.

Weiter kann vorgesehen sein, daß die in der Trägerflüssigkeit nicht lösliche Komponente mit einer Dosiervorrichtung bereitgestellt und sodann mittels eines unter Überdruck stehenden Treibgases eingesprüht wird.

In einer weiteren Ausgestaltung kann vorgesehen sein, daß als Treibgas ein Inertgas verwendet wird. Bei dem Inertgas handelt es sich um ein Gas, das chemisch inert ist, d.h. das nicht oder nur sehr träge mit anderen Stoffen chemische Verbindungen eingeht.

Vorzugsweise kann vorgesehen sein, daß das Treibgas Stickstoff ist. Bevorzugt kann Technischer Stickstoff, noch weiter bevorzugt Reinststickstoff als Inertgas vorgesehen sein. Als Inertgas können weiter Edelgase, wie Helium, Argon, Krypton und/oder Xenon vorgesehen sein. Die Förderung der hydrophoben Komponente mittels eines Treibgases ist deshalb bevorzugt, weil das Volumen der in die Trägerflüssigkeit eingesprühten in der Trägerflüssigkeit nicht löslichen Komponente i.a. viel kleiner ist als das Volumen der Verbindungsleitung zwischen der Sprühvorrichtung und dem Vorratsbehälter. Nach Abschluß der Dosierung kann bei Verzicht auf das Treibgas ein nicht unbedeutender Rest der in der Trägerflüssigkeit nicht löslichen Komponente in der Verbindungsleitung verbleiten.

In einer weiteren vorteilhaften Ausgestaltung kann vorgesehen sein, daß es sich bei der Trägerflüssigkeit um Wasser, vorzugsweise um destilliertes und/oder mit einem Ionenaustauscher hergestelltes Reinstwasser, weiter bevorzugt um bei Niedrigtemperatur destilliertes Wasser, handelt. Solches Wasser ist besonders gut für kosmetische und pharmazeutische Anwendungen geeignet.

Weiter kann vorgesehen sein, daß die Dispersion während des Dispergierens einem Magnetfeld und/oder einem elektrostatischen Feld und/oder einem elektromagnetischen Feld ausgesetzt wird.

Insbesondere kann vorgesehen sein, das Dispergieren in einer Vorrichtung vorzunehmen, die solche Felder bereitstellt, deren Stärke über die der natürlichen Felder hinausgeht. Wassermoleküle sind als Dipole ausgebildet, die sich in magnetischen und/oder elektrischen Feldern ausrichten können. Die Eigenschaften der Felder müssen mangels gesicherter Theorien empirisch bestimmt werden. Die gezielte Beeinflussung der Wassermoleküle kann insbesondere für die Herstellung von Dispersionen von Bedeutung sein, die für kosmetische und/oder medizinische Anwendungen vorgesehen sind.

In einer vorteilhaften Ausgestaltung kann vorgesehen sein, daß die Achsen des inneren und/oder des äußeren Wirbels zum Magnetfeld der Erde ausgerichtet werden. Auf diese Weise kann beispielsweise auf eine zusätzliche Vorrichtung zur Beeinflussung der Wassermoleküle verzichtet werden.

Die Erfindung wird nun anhand der Zeichnungen näher erläutert.

Es zeigen

Fig. 1      eine schematische Zusammenstellung einer für die Ausführung des erfindungsgemäßen Verfahrens bestimmten Vorrichtung und mit ihr verbundener Einrichtungen;

Fig. 2      eine Schnittansicht der Vorrichtung in Fig. 1;

Fig. 3      eine schematische Darstellung der Strömungsverhältnisse in der Vorrichtung in Fig. 1;

Fig. 4      eine Schnittansicht der Vorrichtung in Fig. 1 mit veränderter Sprühvorrichtung;

Fig. 5      eine perspektivische Schnittdarstellung des unteren Abschnitts eine geringfügig modifizierten Ausführungsbeispiels der Vorrichtung 1;

Fig. 6      eine perspektivische Ansicht des Rotors der Vorrichtung in Fig. 5;

Fig. 7a     eine elektronenmikroskopische Aufnahme eines ersten Ausführungsbeispiels einer erfindungsgemäßen Dispersion;

Fig. 7b     eine beispielhafte Verteilung der Partikelgößen der Dispersion in Fig. 7a;

Fig. 8      eine elektronenmikroskopische Aufnahme eines zweiten Ausführungsbeispiels einer erfindungsgemäßen Dispersion;

Fig. 9A     zeigt eine Wasser/Vitamin E-Dispersion mit einer Tröpfchengröße von 15 bis 30 nm nach einer Standzeit von 7 Monaten

Fig. 9B     zeigt eine Wasser/Vitamin E Dispersion mit einer Tröpfchengröße von 15 bis 30 nm nach einer Standzeit von 12 Monaten

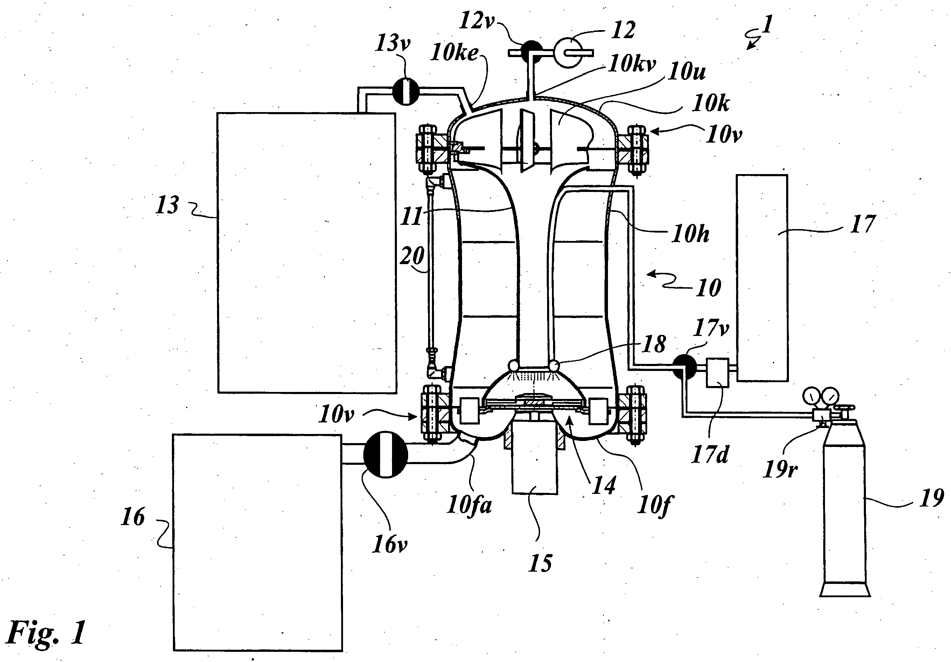

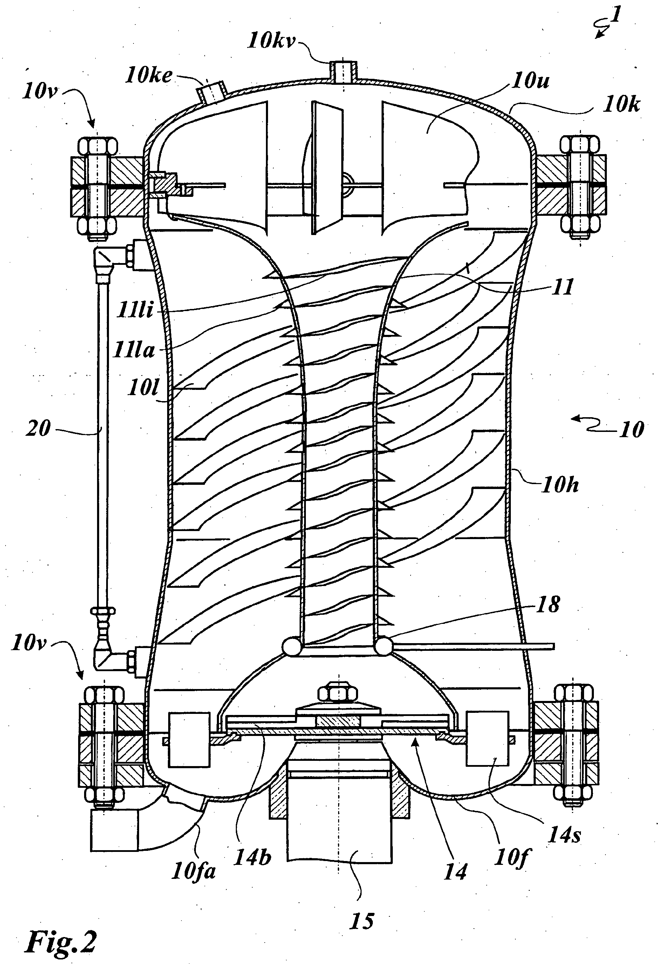

Die Fig. 1 zeigt eine Vorrichtung 1 zum intensiven Mischen einer Flüssigkeit und mindestens einem flüssigen oder festen Additiv zu einer Dispersion, vorzugsweise zum Herstellen der erfindungsgemäßen Dispersion, und zum Durchführen des erfindungsgemäßen Verfahrens. Die Fig. 2 zeigt die Vorrichtung 1 in vergrößerter und detaillierter Darstellung.

Die Vorrichtung 1 weist ein geschlossenes rotationssymmetrisches Gehäuse 10 auf, in dem ein rotationssymmetrischer Innentubus 11 zentrisch angeordnet ist. Im Bereich des unteren kuppelförmigen Abschnitts des an beiden Stirnseiten offenen Innentubus 11 ist ein Rotor 14 angeordnet. Der Rotor 14 weist in seinem radial inneren Abschnitt Rotorblätter 14b und an seinem radial äußeren Abschnitt Rotorschaufeln 14s auf, die sich senkrecht zur radialen Ebene erstrecken. Der Rotor 14 ist so angeordnet, daß die Rotorschaufeln radial sich erstrecken und den kuppelförmigen Abschnitt des Innentubus 11 umgreifen, so daß die Rotorschaufeln 14s in den Bereich zwischen der Innenwandung des Gehäuses 10 und der Außenwandung des kuppelförmigen Abschnitts des Innentubus 11 eingreifen, während die Rotorblätter 14b im Innenraum des kuppelförmigen Abschnitts des Innentubus 11 angeordnet sind.

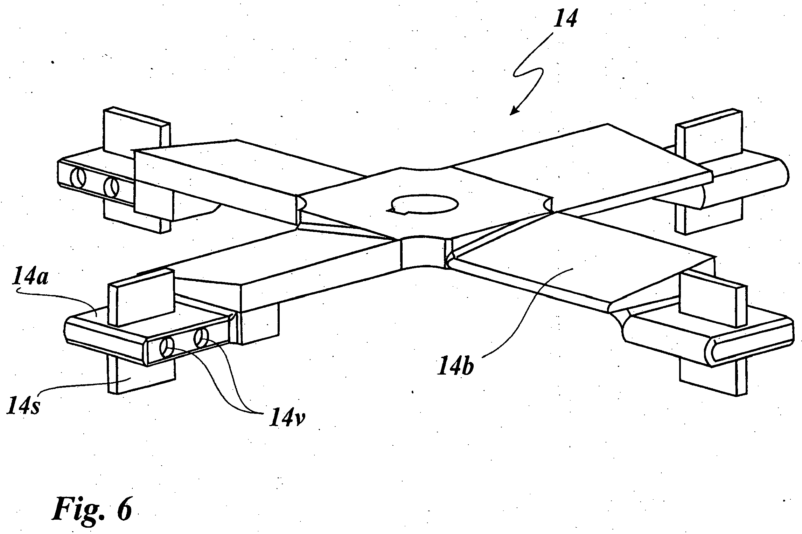

Ein bevorzugtes Ausführungsbeispiel des Rotors ist in Fig. 6 näher dargestellt und wird in der vorliegenden Beschreibung noch im einzelnen beschrieben. Wie in den Fig. 1 und 2 erkennbar, ist der Rotor 14 mit der Abtriebswelle eines Motors 15 verbunden. Es kann sich vorteilhafterweise um einen drehzahlgeregelten Elektromotor handeln.

Das Gehäuse 10 ist in dem in Fig. 1 und 2 dargestellten Ausführungsbeispiel dreigeteilt ausgeführt und in eine Hauptsektion 10h, eine Kopfsektion 10k und eine Fußsektion 10f gegliedert. Die Endabschnitte der Sektionen 10k, 10h, 10f sind mit Ringflanschen verbunden, die am Umfang verteilt lösbare Verbindungen 10v aufweisen. In dem in Fig. 1 und 2 dargestellten Ausführungsbeispiel sind die lösbaren Verbindungen mit Zylinderschrauben ausgeführt. Es kann aber vorteilhafterweise vorgesehen sein, die Verbindungen als Schnellspannverbindungen auszuführen, um das Gehäuse 10 zu Wartungszwecken leicht öffnen zu können. Wie in Fig. 1 und 2 angedeutet, sind die Ringflansche über eine kreisringförmige Dichtungsscheibe miteinander verschraubt, so daß das Gehäuse 10 als flüssigkeits- und gasdichtes Gehäuse ausgebildet ist.

Die Kopfsektion 10k ist im wesentlichen kuppelförmig ausgebildet. Sie weist einen zentrischen Anschlußstutzen 10kv für den Anschluß einer Vakuumpumpe 12 auf. In die Zuleitung zur Vakuumpumpe 12 ist ein Dreiwegeventil 12v eingefügt, das in der einen Stellung die Vakuumpumpe mit dem Innenraum des Gehäuses 10 verbindet, und das in der anderen Stellung den Innenraum des Gehäuses 10 mit der Außenluft verbinder. Die Vakuumpumpe 12 kann im Gasraum über der Flüssigkeit einen Unterdruck einstellen, der das Auftreten der weiter unten beschriebenen Kavitation begünstigen kann. Vor dem Entleeren des Gehäuses 10 ist das Dreiwegeventil 12v so einzustellen, daß der Innenraum des Gehäuses 10 mit der Außenluft verbunden ist, d.h. der Unterdruck aufgehoben ist.

Die Kopfsektion 10k weist des weiteren einen Einfüllstutzen 10ke auf, der mit dem Ausgang einer Destillationsanlage 13 verbunden ist. Bei der Destillationsanlage kann es sich beispielsweise um eine Niederdruckdestillationsanlage handeln. Die in der Fig. 1 schematisch dargestellte Destillationsanlage umfaßt alle Einrichtungen, die benötigt werden, um am Ausgang der Destillationsanlage 13 eine Flüssigkeit mit vorbestimmter Temperatur bereitzustellen. Bei der Flüssigkeit kann es sich vorzugsweise um Wasser handeln, aus dem durch Zumischen eines flüssigen Additivs eine Emulsion oder durch Zumischen eines festen Additivs eine Suspension hergestellt wird. Als Oberbegriff wird im weiteren "Dispersion" verwendet. In die Zuleitung von der Destillationsanlage 13 ist ein Absperrventil 13v eingefügt.

Im Innern der Kopfsektion 10k sind stationäre Umlenkschaufeln 10u angeordnet, deren Ausbildung und Funktion weiter unten näher erläutert wird.

Die Hauptsektion 10h ist als ein im mittleren Abschnitt leicht eingeschnürter Kreiszylinder ausgebildet. Der genaue Verlauf seiner Mantelfläche wird zweckmäßigerweise durch Versuche bestimmt. Er ist u.a. abhängig von der Ausbildung der Mantelfläche des Gehäuses 10 und so zu bemessen, daß der Strömungsverlauf der Dispersion in dem Ringraum zwischen der Außenwand des Innentubus 11 und der Innenwand des Gehäuses 10 optimiert ist.

Die Fußsektion 10f des Gehäuses 10 ist im wesentlichen mit toroidalem Verlauf ausgebildet, wobei der Innenraum des Toroids zur Aufnahme des Lagers des Rotors 14 und zur Befestigung des Motors 15 bestimmt ist. Die Ausführung dieses konstruktiven Details ist in der Fig. 2 nur angedeutet. Sie ist im wesentlichen abhängig von der Ausführungsform des Motors 15. Es ist mindestens ein gas- und flüssigkeitsdichtes Rotorlager vorzusehen.

Die Fußsektion 10f ist mit einem Ablaßstutzen 10fa versehen, der etwa am tiefsten Abschnitt der Fußsektion angeordnet ist, so daß die fertiggestellte Dispersion ungehindert und vollständig abfließen kann.

Der Ablaßstutzen 10fa ist unter Zwischenschaltung eines Absperrventil 16v mit einem Sammelbehälter 16 verbunden, der zur Zwischenlagerung der aus dem Gehäuse 10 entnommenen Dispersion bestimmt ist.

Die Vorrichtung 1 ist weiter mit einem Vorratsbehälter 17 zur Bereitstellung des Additivs verbunden. Der Vorratsbehälter 17 verfügt an seinem Ausgang über eine Dosierpumpe 17d, die unter Zwischenschaltung eines Dreiwegeventils 17v mit einer Sprühvorrichtung 18 verbunden ist. Die Verbindungsleitung zwischen Dreiwegeventil 17v und Sprühvorrichtung 18 durchgreift die Wandung des Gehäuses 10.

Die Sprühvorrichtung 18 ist in dem in Fig. 1 und 2 dargestellten Ausführungsbeispiel als Ringdüse ausgebildet, die am oberen Ursprungsrand des glockenförmigen Abschnitts des Innentubus 11 angeordnet ist. Alternativ oder zusätzlich können noch eine oder mehrere Sprühvorrichtungen an anderer Stelle vorgesehen sein. Beispielsweise kann die Sprühvorrichtung als Sprühkopf ausgebildet sein und über dem Mittelpunkt des Rotors 14 angeordnet sein. Es können auch weitere Sprühvorrichtungen 18 als Ringdüsen und/oder als Sprühköpfe ausgebildet sein, die stromaufwärts vor dem glockenförmigen Abschnitt des Innentubus 11 angeordnet sind.

Das Dreiwegeventil 17v ist des weiteren mit einem Druckgasbehälter 19 verbunden, dessen Ausgang über einen Gasdruckregler 19r geführt ist. Bei dem Gasdruckregler 19r kann es sich beispielsweise auch um ein als Nadelventil ausgebildetes Reduzierventil handeln. Der Druckgasbehälter 19 ist vorgesehen, um mittels eines unter Überdruck stehenden Inertgases, wie Stickstoff, oder mittels eines Edelgases das mit der Dosierpumpe 17d zugeführte Additiv der Sprühvorrichtung 18 zuzuführen und die Zuführungsleitung vollständig zu leeren. Da es sich bei dem Additiv um kleine Mengen handelt, muß dafür Sorge getragen werden, daß keine Reste des Additivs in der Zuleitung verbleiben. Es kann auch vorgesehen sein, ein anderes Druckgas zu verwenden, jedoch darf das Druckgas weder mit dem Dispersionsmittel noch mit dem Additiv chemisch reagieren oder eine Lösung eingehen. Das für Getränke eingesetzte Druckgas $CO_2$

beispielsweise ist sowohl chemisch als auch physikalisch in Wasser löslich und deshalb als Druckgas ungeeignet.

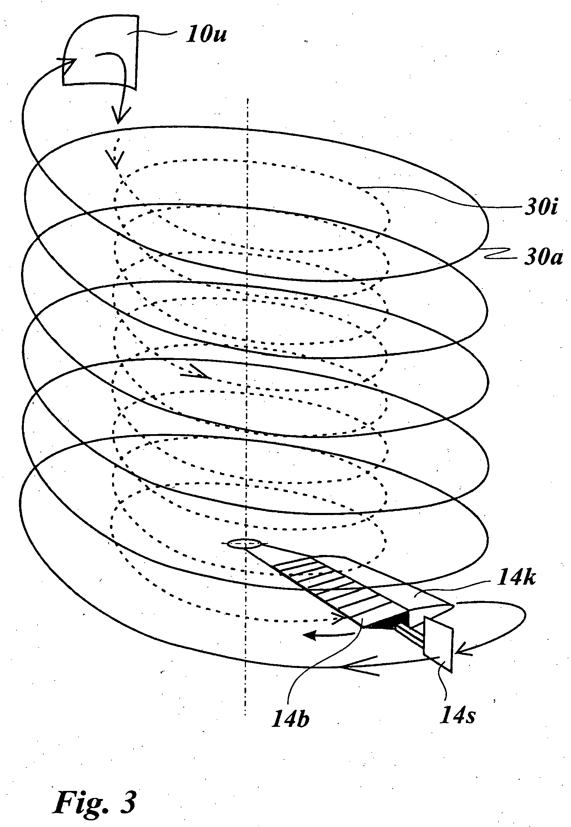

Fig. 3 zeigt nun eine schematische Darstellung der Strömungsverhältnisse in der vorstehend beschriebenen Vorrichtung 1, wobei in der folgenden Beschreibung auch auf in Fig. 2 dargestellte Positionen Bezug genommen wird.

Die Dispersion wird im Innentubus 11 von oben nach unten durch den Rotor 14 angesaugt und nach außen in den Ringraum zwischen Innentubus 11 und Innenwandung des Gehäuses 10 gefördert. Die Rotorschaufeln 14s fördern die Dispersion in dem bezeichneten Ringraum von unten nach oben, die durch die Umlenkschaufeln 10u umgelenkt in den Innentubus zurückströmt.

Die Dispersion bildet in der Vorrichtung 1 einen inneren Flüssigkeitswirbel 30i und einen zentrisch um diesen angeordneten äußeren Flüssigkeitswirbel 30a. Bei beiden Wirbeln handelt es sich um schraubenlinienförmig kreisende Flüssigkeitswirbel mit gegensinnig zueinander ausgebildeter Strömungsrichtung. Die beiden Flüssigkeitswirbel 30i, 30a sind durch die Wandung des Innentubus 11 voneinander getrennt. Der äußere Flüssigkeitswirbel 30a wird durch die Rotorschaufeln 14s von oben auf den Flüssigkeitswirbel geblickt in dem dargestellten Ausführungsbeispiel im Uhrzeigersinn in eine rotierende Bewegung versetzt. In Fig. 3 ist nur eine Rotorschaufel 14s dargestellt, die an einem Fortsatz am Ende des Rotorblatts 14b angeordnet ist. Wie in Fig. 2 zu erkennen, wird die Ausformung der Wirbelströmumg durch ein an der Innenwand des Gehäuses 10 angeordnete Leiteinrichtung 10l unterstützt, die in einer Schraubenlinie verläuft.

Eine an der Außenwand des Innentubus 11 angeordnete äußere Leiteinrichtung 11la ist ebenfalls schraubenlinienförmig ausgebildet, doch mit einer Gangrichtung, die entgegengesetzt zur Gangrichtung der vorstehend beschriebenen Leiteinrichtung 10l ausgebildet ist. Auf diese Weise wird der aufsteigende äußere Flüssigkeitswirbel 30a von der Außenwand des Innenbehälters 11 abgelöst, wobei dieser Effekt durch die am Flüssigkeitswirbel angreifende Fliehkraft unterstützt wird.

Der äußere Flüssigkeitswirbel 30a trifft im oberen Abschnitt des Gehäuses 10 auf die Umlenkschaufeln 10u - in Fig. 3 ist nur eine Umlenkschaufel dargestellt - und wird von diesen in eine entgegen gesetzte Drehrichtung versetzt, wodurch der innere Flüssigkeitswirbel 30i ausgebildet ist. Der innere Flüssigkeitswirbel 30i rotiert deshalb zum Uhrzeigersinn entgegengesetzt. Zur Ausbildung des inneren Flüssigkeitswirbels 30i ist eine innere Leiteinrichtung 11li vorgesehen, die an der Innenwand des Innenbehälters 11 angeordnet ist und die mit gleicher Gangrichtung ausgebildet ist wie die an der Innenwand des Gehäuses angeordnete Leiteinrichtung 10l.

Die Leiteinrichtungen 10l, 11la, 11li sind in dem in Fig. 2 dargestellten Ausführungsbeispiel aus einem schraubenlinienförmig gewendelten Bandmaterial gebildet, beispielsweise aus einem Blechband, das mit der Wand des Gehäuses 10 und/oder mit der Innenwand oder mit der Außenwand des Innentubus 11 verbunden ist. Die Leiteinrichtungen können aber auch einstückig mit der Wand des Gehäuses 10 und/oder mit der Innenwand oder mit der Außenwand des Innentubus 11 ausgebildet sein, beispielsweise eingeprägt sein. Wenn die Leiteinrichtungen in die Wandung des Innentubus 11 eingeprägt werden, kann vorteilhafterweise eine doppelte Wandung für den Innentubus 11 vorgesehen sein, so daß Überschneidungen zwischen den Leiteinrichtungen 11 a und 11 i vermieden sind.

Der Querschnitt der Leiteinrichtungen 10l, 11la, 11li ist nicht auf den bandförmigen Querschnitt beschränkt. Der Querschnitt kann fertigungsbedingt gewählt sein, er kann aber auch nach funktionellen Aspekten gestaltet sein.

Eine weitere Gestaltungsmöglichkeit ist durch die Ganghöhe und/oder die Gangtiefe der schraubenförmigen Leiteinrichtung gegeben, wodurch die Anzahl der übereinander rotierenden Wirbel und/oder die Einwirkungstiefe der Leiteinrichtung variierbar sind.

Der innere Flüssigkeitswirbel trifft im glockenförmigen unteren Abschnitt des Innentubus 11 auf die mit entgegengesetzter Drehrichtung rotierenden Rotorblätter 14b des Rotors 14. Dabei bildet sich infolge der hohen Relativgeschwindigkeit zwischen dem Rotorblatt 14b und dem inneren Flüssigkeitswirbel 30i hinter dem Rotorblatt 14b eine Kavitatiönszone 14k aus. Kavitation ist ein Effekt, der in bewegten Flüssigkeiten beobachtet wird, wenn der hydrostatische Druck in der bewegten Flüssigkeit lokal auf einen Wert absinkt, der in etwa dem Dampfdruck der Flüssigkeit entspricht. Es bilden sich dann kleine mit Dampf gefüllte Blasen, die mit der strömenden Flüssigkeit schließlich in Bereiche höheren Drucks gelangen und dort zusammenstürzen. Bei der Blasenimplosion entstehen im Innern der Blase und in ihrer näheren Umgebung hohe Druckspitzen, die ganz wesentlich das Aufbrechen der Cluster des Additivs unterstützen. Das Rotorblatt 14b ist auf einen geringen Strömungswiderstand und das Auftreten der Kavitation erst an der hinteren Kante des Rotorblattes 14b, der sogenannten Abrißkante, optimiert. Ein wesentliches Ziel der Optimierung ist das Auftreten von Superkavitation hinter dem Rotorblatt 14b, wodurch die Cluster hauptsächlich aufgebrochen werden. Die schneidenförmig ausgebildete Vorderkante des Rotorblatts 14b hat am Aufbrechen der Cluster nur einen geringen Anteil.

Wie in Fig. 3 zu erkennen, wird hinter der Kavitationszone 14k die Drehrichtung des Flüssigkeitswirbels 30i umgelenkt, wonach die Dispersion sodann, wie weiter oben beschrieben, durch die Rotorschaufeln 14s wieder in Rotation versetzt wird.

Durch die zweimalige Umkehrung der Rotationsrichtung der in Flüssigkeitswirbeln 30a, 30i bewegten Dispersion sowie das Aufbrechen der Cluster des Additivs durch Superkavitation wird eine besonders homogene und langzeitstabile Dispersion erhalten, die sich desweiteren durch einen geringen Streuwert der Partikelgröße des Additivs auszeichnet.

In Fig. 1 und 2 ist beispielhaft ein Füllstandssensor 20 dargestellt, der den Füllstand im Gehäuse 10 bei ruhendem Rotor 14 anzeigt. Es handelt sich in diesem Ausführungsbeispiel um einen handelsübliche Schwebekörper-Füllstandssensor. Wenn die Steuerung und Regelung der Vorrichtung 1 und der mit ihr verbundenen Komponenten vorgesehen ist, können weitere in den Fig. 1 und 2 nicht dargestellte Sensoren vorgesehen sein, beispielsweise Druck,-Temperatur-, Durchfluß- und Mengen-Sensoren.

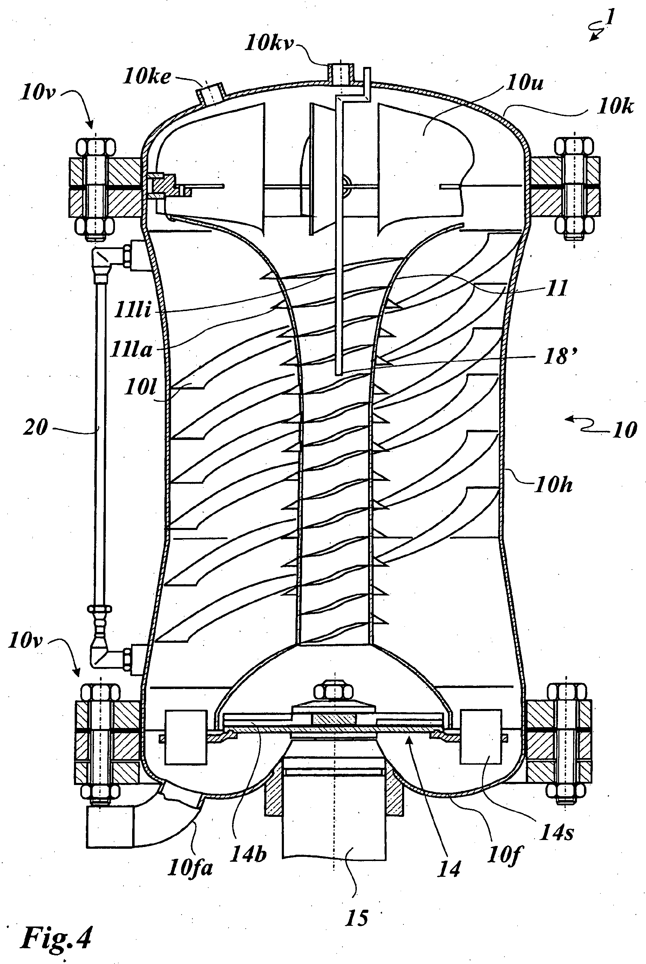

Die Fig. 4 zeigt nun eine Vorrichtung 1, wie sie in Fig. 1 und 2 dargestellt ist, mit einer veränderten Sprühvorrichtung 18'. Bei der Sprühvorrichtung 18' handelt es sich um ein Kapillarrohr, das wegen seines geringen Innendurchmessers ein geringes Innenvolumen aufweist und so gut an das geringe zu dosierende Volumen des Additivs angepaßt ist. Die Mittelachse der Sprühvorrichtung 18' fällt mit der Mittelachse des Innentubus 11 zusammen. Sie ist so im "Auge" des Flüssigkeitswirbels angeordnet. Das Additiv wird in diesem Ausführungsbeispiel also in einen Bereich geringer Strömungsgeschwindigkeit dosiert. Der obere Abschnitt der Sprühvorrichtung durchgreift die Kopfsektion 10k, wobei vorgesehen sein kann, daß sie dort abgewinkelt ausgebildet ist und daher neben dem Anschlußstutzen 10kv für die Vakuumpumpe die Wandung der Kopfsektion 10k durchgreift. Die Sprühvorrichtung 18' mündet am unteren Ende des oberen Drittel des Innentubus 11.

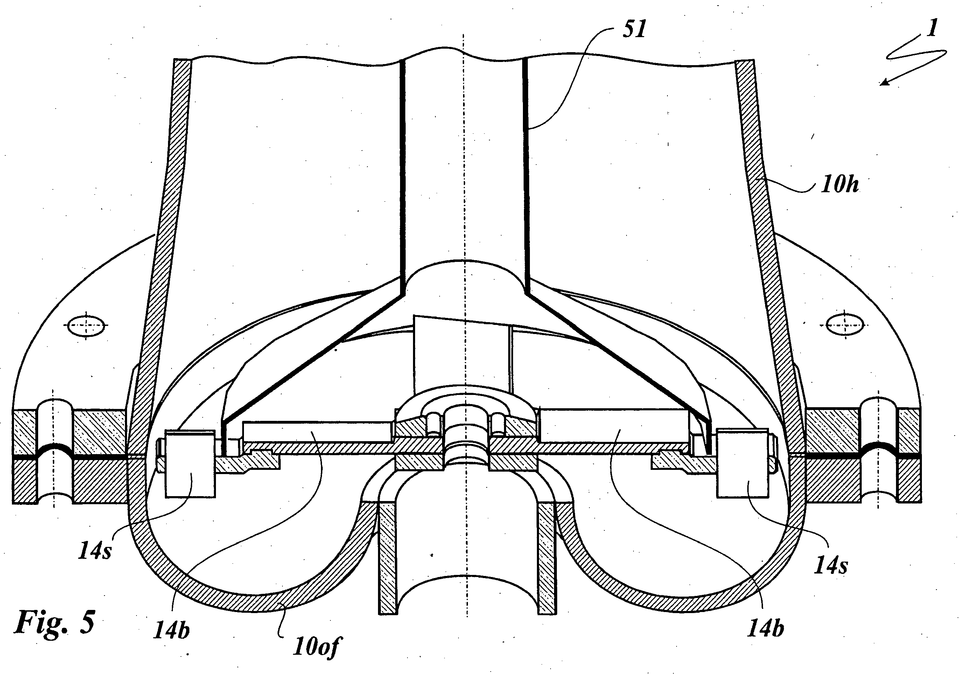

Die Fig. 5 und 6 zeigen nun ein zweites Ausführungsbeispiel der erfindungsgemäßen Vorrichtung, das sich von der Vorrichtung 1 in Ausführungsdetails des Rotors und des unteren Abschnitts des Innentubus unterscheidet.

Fig. 5 zeigt den unteren Abschnitt der Vorrichtung 1, die einen modifizierten Innentubus 51 aufweist, dessen unterer Abschnitt als Kegelstumpf ausgebildet ist, der in einen Kreiszylinder übergeht. Im übrigen ist der Innentubus 51 wie der in Fig. 1 und 2 dargestellte Innentubus 11 ausgeführt. Der Innentubus 51 kann einfacher zu fertigen sein, weil sein unterer Abschnitt aus einfachen geometrischen Körpern zusammengesetzt ist.

In Fig. 5 sind die Leiteinrichtungen sowie die Dosiereinrichtung nicht dargestellt. Es kann allerdings vorgesehen sein, auf eine oder mehrere der weiter oben genannten Leiteinrichtungen 10l, 11la, 11li zu verzichten, wobei jedoch die Dosiereinrichtung unverzichtbar ist.,

Fig. 6 zeigt den Rotor 14, dessen Rotorblätter 14b einen vierflügeligen Propeller bilden. In dem in Fig. 6 dargestellten Ausführungsbeispiel ist die Vorderkante des Rotorblatts 14b leicht gerundet. Es kann aber auch vorgesehen sein, daß sie als schneidenförmige Kante ausgebildet ist. Bei der Gestaltung der Vorderkante des Rotorblatts 14b ist ein Kompromiß zu finden zwischen optimaler Kavitation und Standzeit der Rotorblätter.

Die Rotorschaufeln 14s sind als rechteckige Platten ausgebildet, deren Vorderseite in einer von Radiusvektor und Drehachse des Rotors 14 aufgespannte Ebene verläuft.

Die Rotorschaufel 14s durchdringt die Aufnahme 14a, wobei die über die Aufnahme 14a hinausragenden Abschnitte der Rotorschaufel 14s in dem in Fig. 4 dargestellten Ausführungsbeispiel etwa gleich groß sind. Die Aufnahme 14a ist von zwei Gewindebohrungen durchgriffen, in die jeweils versenkbare Befestigungsschrauben eingeschraubt sind, die zwischen der Rotorschaufel 14s und der Aufnahme 14a eine kraftschlüssige Verbindung herstellen. Eine solche Anordnung ist besonders vorteilhaft, wenn der Austausch der Rotorschaufeln vorgesehen ist. Auf diese Weise kann beispielsweise die Ausbildung der Rotorschaufeln durch Versuchsreihen optimiert werden. Es kann aber auch eine einstückige Ausbildung des Rotors vorgesehen sein.

Bei der Dimensionierung des Rotors 14 ist zu beachten, daß es sich um ein mechanisch hoch beanspruchtes Bauteil handelt. Über den Rotor wird in dem dargestellten Ausführungsbeispiel etwa eine Leistung von 7 kW in die Dispersion eingetragen, die ein Volumen von etwa 35 l aufweist.

Vorzugsweise wenn es sich bei dem Dispersionsmittel um Wasser handelt, dessen Möleküle als Dipole ausgebildet sind und sich in einem magnetischen und/oder elektrischen Feld, und/oder elektromagnetischen Feld ausrichten können, können Mittel zur Erzeugung solcher Felder vorgesehen sein, die vorzugsweise im Bereich des glockenförmigen Abschnitts des Innentubus angeordnet sein können. Dann kann vorteilhafterweise weiter vorgesehen sein, das Gehäuse und den Innentubus aus nichtleitendem und/oder nichtmagnetisierbarem Material auszubilden. Es kann alternativ vorgesehen sein, auf Mittel zur Felderzeugung zu verzichten und die Vorrichtung im irdischen Magnetfeld auszurichten.

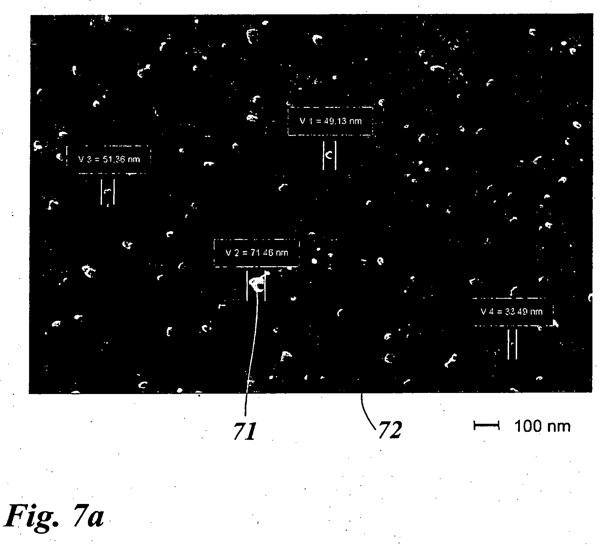

Fig. 7a zeigt nun eine elektronenmikroskopische Aufnahme eines ersten Ausführungsbeispiels der erfindungsgemäßen Dispersion, die mit vorstehend beschriebener Vorrichtung und Verfahren hergestellt ist. Die Aufnahme zeigt einen Querschnitt durch ein Tröpfchen einer aus feinstgemahlenem Quarzsand-Partikeln 71 und Wasser 72 bestehenden Dispersion. Die Quarzsand-Partikel 71 weisen eine mittlere Partikelgröße zwischen 30 nm und 80 nm auf. Wie in Fig. 7a zu erkennen ist, sind die Quarzsand-Partikel 71 sehr gleichmäßig im Wasser 72 verteilt.

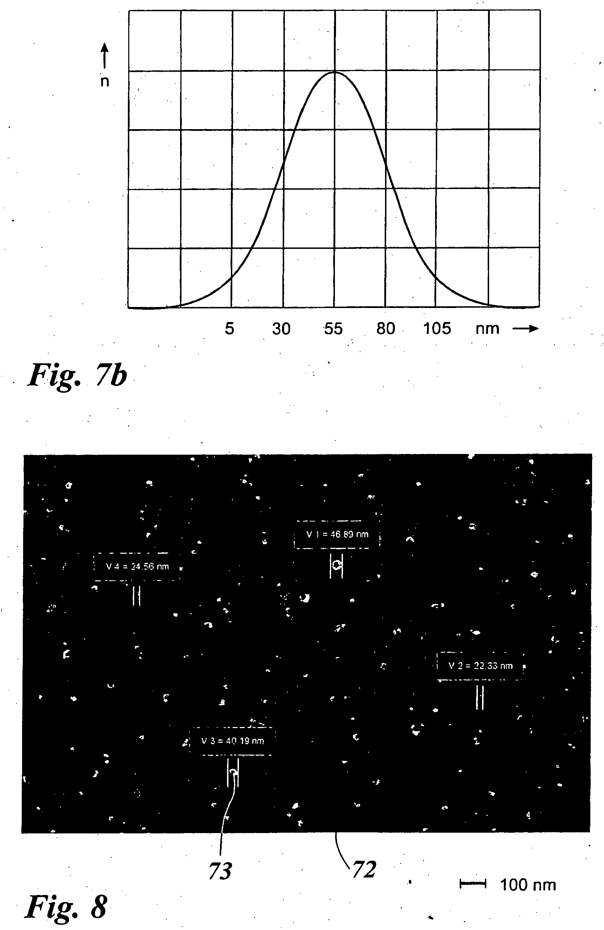

Fig. 7b zeigt in einem Diagramm die Mengenverteilung der Quarzsand-Partikel 72. Die Mengenverteilung folgt in diesem Anwendungsbeispiel der Gaußschen Normalverteilung. Mehr als 68% der Quarzsand-Partikel weisen eine Partikelgröße zwischen 30 nm und 80 nm auf, die mittlere Partikelgröße beträgt 55 nm. Es kann sich aber auch um eine nicht normal verteilte Menge von Partikeln handeln, wobei jedoch darauf zu achten ist, daß eine mittlere Partikelgröße gewählt ist, die innerhalb des bezeichneten Bereichs liegt. Je geringer die Streuung der Partikelgröße ist, desto gleichmäßiger können die Partikel in der Dispersion verteilt sein.

Die Beeinflussung der Partikelgröße und der Mengenverteilung ist in diesem Ausführungsbeispiel im wesentlichen durch die Aufbereitung des Quarzsandes vor der Zugabe in das Wasser möglich, d.h. durch Zermahlen des Quarzsandes und anschließendes Fraktionieren durch Sieben des gemahlenen Quarzsandes.

Fig. 8 zeigt eine elektronenmikroskopische Aufnahme eines zweiten Ausführungsbeispiels der erfindungsgemäßen Dispersion, die ebenfalls mit vorstehend beschriebener Vorrichtung und Verfahren hergestellt ist. Die mit dem gleichen Abbildungsmaßstab wie in Fig. 7b ausgeführte Aufnahme zeigt Ruß-Partikel 73, die mit dem Wasser 72 eine Dispersion bilden, wobei die in Fig. 8a hervorgehobenen Ruß-Partikel 73 eine Partikelgröße zwischen 22 nm und 47 nm aufweisen. Bei den Rußpartikeln 73 handelt es sich um Flammruß, bei dem die Rußpartikel im Auslieferungszustand zu großen fadenförmigen Clustern verkettet sind. Diese Cluster werden durch das erfindungsgemäße Verfahren so aufgebrochen, daß die Rußpartikel im Wasser gleichmäßig verteilt sind. Bei den Rußpartikeln handelt es sich um Nano-Partikel mit einer Partikelgröße kleiner 50 nm. In diesem Ausführungsbeispiel ist die Partikelgröße im wesentlichen durch einen chemisch-physikalischen Prozeß bestimmt. Eine Fraktionierung durch Sieben ist nicht möglich, denn die Rußpartikel schließen sich zu den vorstehend beschriebenen fadenförmigen Clustern zusammen und liegen nicht als Gemenge einzelner, voneinander getrennter Partikel vor.

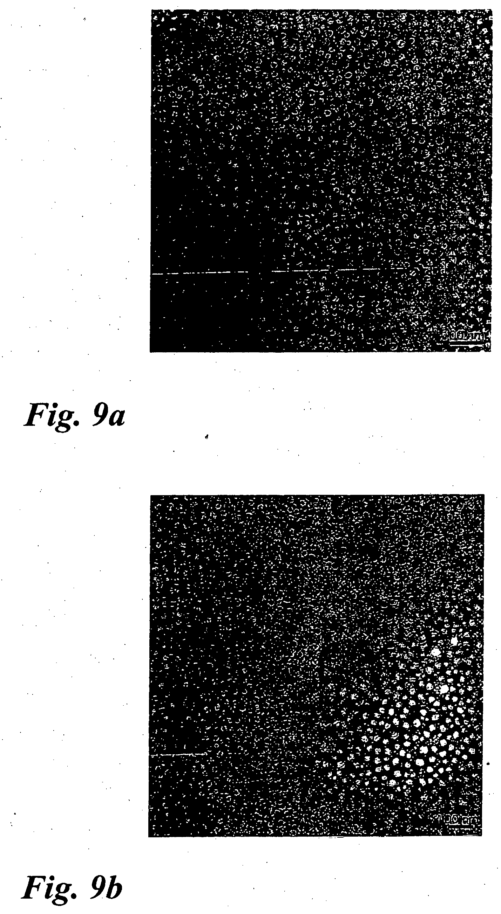

Figur 9A zeigt eine Wasser/Vitamin E Dispersion. Das Präparat ist homogen verteilt. Die Partikelgröße liegt in einem Bereich von 15 bis 30 nm. Die Dispersion wurde 7 Monate nach ihrer Herstellung untersucht.

Figur 9B zeigt eine Wasser/Vitamin E Dispersion. Das Präparat ist homogen verteilt. Die Partikelgröße liegt in einem Bereich von 15 bis 30 nm. Die Dispersion wurde 12 Monate nach ihrer Herstellung untersucht. Es handelt sich um dieselbe Dispersion wie in Figur 9A. Im Zeitraum zwischen 7 Monaten und 12 Monaten nach Herstellung kam es zu keinen Veränderungen.

Bezugszeichenliste

| 1 | Vorrichtung zum Mischen |
| 10 | Gehäuse |
| 10f | Fußsektion |
| 10h | Hauptsektion |
| 10k | Kopfsektion |
| 10ke | Einfüllstutzen |
| 10kv | Anschlußstutzen für Vakuumpumpe |
| 10l | Leiteinrichtung |
| 10u | Umlenkschaufel |
| 10v | Verbindung |
| 11 | Innentubus |
| 11la | äußere Leiteinrichtung |
| 11li | innere Leiteinrichtung |
| 12 | Vakuumpumpe |
| 12v | Dreiwegeventil |
| 13 | Destillationsanlage |
| 13v | Absperrventil |
| 14 | Rotor |
| 14a | Aufnahme für Rotorschaufel 14s |
| 14b | Rotorblatt |
| 14k | Kavitationszone |
| 14s | Rotorschaufel |
| 14v | Verbindungselement |
| 15 | Motor |
| 16 | Sammelbehälter |
| 16v | Absperrventil |
| 17 | Vorratsbehälter |
| 17d | Dosierpumpe |
| 17v | Dreiwegeventil |
| 18 | Sprühvorrichtung |
| 18 | Sprühvorrichtung |
| 19 | Druckgasbehälter |
| 19r | Gasdruckregler |
| 20 | Füllstandssensor |
| 30a | äußerer Flüssigkeitswirbel |
| 30i | innerer Flüssigkeitswirbel |
| 51 | Innentubus |

71      Quarzsand-Partikel
72      Wasser
73      Ruß-Partikel

Durch die nachfolgenden Beispiele soll die vorliegenden Erfindung erläutert, aber in keiner Weise beschränkt werden.

**Beispiele**

Die Proben wurden mit der in Figur 1 dargestellten Maschine bei 6610 U/min bei einem Rotordurchmesser von 25 cm hergestellt.

Beispiel 1

Unter dem Elektronenmikroskop wurden verschiedene kolloidale Dispersionen wie folgt untersucht:

Standardobjektträger wurden im Ionenplasma mit einer Restatmosphäre von Amylamin hydrophob gemacht (glow discharge) und jeweils mit einem Tropfen der kolloidalen Lösung für 2 min in Kontakt gebracht. Anschließend wurde das Präparat mit Filterpapier abgesaugt und das Präparat mit Uranylformiat in Wasser negativ angefärbt. In dem Präparat erscheinen die Tropfen und/oder Partikel hell und die Umgebung dunkel. Die Beobachtung unter dem Elektronenmikrospop erfolgte in einem Transmissions-Elektronenmikroskop bei einer Beschleunigungsspannung von 80.000 Volt.

Ergebnis:

Figur 9A zeigt eine Wasser/Vitamin E Dispersion (1 Gew.-% Vitamin E bezogen auf das Gesamtgewicht der wässrigen Dispersion). Das Präparat ist homogen verteilt. Die Partikelgröße liegt in einem Bereich von 15 bis 30 nm. Die Dispersion wurde 7 Monate nach ihrer Herstellung untersucht.

Figur 9B zeigt eine Wasser/Vitamin E Dispersion (1 Gew.-% Vitamin E bezogen auf das Gesamtgewicht der wässrigen Dispersion). Das Präparat ist homogen verteilt. Die Partikelgröße liegt in einem Bereich von 15 bis 30 nm. Die Dispersion wurde 12 Monate nach ihrer Herstellung untersucht. Es handelt sich um dieselbe Dispersion wie in Figur 9A. Im Zeitraum zwischen 7 Monaten und 12 Monaten nach der Herstellung kam es zu keinen Veränderungen.

Beispiel 2

Bei verschiedenen erfindungsgemäßen Dispersionen wurde der Kontaktwinkel, das Zetapotential, die Leitfähigkeit, der pH-Wert und der Polydispersitätsindex gemessen. Alle Messungen wurden bei 25 °C durchgeführt. Die Anzahl der Messungen betrug 20 pro Probe. Es wurde der Mittelwert und die Standardabweichung bestimmt (vgl. Tabelle1).

**Teilchengröße/Polydispersitätsindex**

Die Untersuchungen mit Hilfe der Photonenkorrelationsspektroskopie wurden mit einem Zetasizer HS3000 (Malvern, UK) bei einem festen Winkel von 90 ° durchgeführt.

**Kontaktwinkel**

Die Kontaktwinkel wurden mit Hilfe des Messgerätes Digidrop Contact Angel Meter der Firma GBX Scientific Instruments (Romans, Frankreich) auf einer Glasoberfläche durchgeführt.

**Zetapotential**

Die Untersuchungen des Zetapotentials wurden mit einem Zetasizer HS3000 (Malvern, UK) durchgeführt.

**Leitfähigkeit**

Die Untersuchungen der Leitfähigkeit erfolgte mit einem Konduktometer LF318/SET und einer Standard-Leitfähigkeitsmesszelle TetraCom 325 des Herstellers Wiss.-Techn. Werkstätten GmbH (Weilheim i. OB, Deutschland). Die Leitfähigkeit wurde bei 25 °C gemessen.

**ph-wert**

Die Untersuchungen der pH-Werte wurden mit dem pH-Messgerät Delta 340 der Firma Mettler Toledo (Giessen, Deutschland) durchgeführt.

Tabelle1

| Nicht lösliche Komponente, die mit Wasser als Trägerflüssigkeit gemischt wurde | Kohlenstoff (Flammenruß) | Olivenöl | Dodekan |
|---|---|---|---|
| Gew.-% bezogen auf das Gesamtgewicht der Dispersion | 1,6 Gew.% | 1 Gew.-% | 0,08 Gew.-% |
| mittlerer Kontaktwinkel [o] gemessen auf Glas | 14±5,5 | 23,3 ± 5,5 | 18,4 +/- 3,5 |
| Polydispersitätsindex | 0,183 | 0,163 | 0,49 +/- 0,19 |
| pH-Wert | 6,55 | 3,49 | 6,92 |
| Mittlerer Durchmesser der in der Trägerflüssigkeit nicht löslichen Komponente[nm] | 325 +/- 11,6 | 385 +/-16,6 | 748,6+/- 26,7 |
| Leitfähigkeit [mS/cm] | 0,008 | 0,08 | 0,003 |
| Zetapotential [mV] | -22,4 +/- 2,6 | -27,7 +/- 2,5 | - 34,5 +/- 1 |

**Patentansprüche**

1.  Dispersion aus einer Trägerflüssigkeit, zum Beispiel Wasser, und mindestens einer in der Trägerflüssigkeit nicht löslichen Komponente, welche als gleichmäßig verteilte Tröpfchen und/oder Partikel und/oder Aggregate vorliegt, **dadurch gekennzeichnet,**
    **daß** die Tröpfchen- und/oder Partikelgröße und/oder Aggregatgröße von mindestens 68% der Tröpfchen und/oder Partikel und/oder Aggregate zwischen 1 nm bis 300 nm liegt, und
    **daß** die Tröpfchen und/oder Partikel und/oder Aggregate so in die Struktur der Trägerflüssigkeit eingebunden sind, daß zur Langzeitstabilisierung der Dispersion keine weitere Komponente als Stabilisator-Komponente erforderlich ist, wobei die Dispersion ein Zetapotential in einem Bereich von größer als 15 mV aufweist, wobei das Zetapotential sowohl einen positiven als auch ein negativen Wert aufweisen kann.

2.  Dispersion, vorzugsweise nach Anspruch 1, umfassend eine Trägerflüssigkeit und mindestens eine in der Trägerflüssigkeit nicht lösliche Komponente, welche als gleichmäßig verteilte Tröpfchen und/öder Partikel und/oder Aggregate vorliegt, **dadurch gekennzeichnet,**
    **daß** die Dispersion weniger als 1 Gew.- % Stabilisator-Komponenten, bezogen auf die Gesamtmenge der Dispersion umfasst, und
    wobei mindestens 70 Gew.-% der nicht löslichen Komponente, bezogen auf die Gesamtmenge der nicht löslichen Komponente, in Form von Tröpfchen und/oder Partikeln und/oder Aggregaten in einer Größe in einem Bereich von 0,1 bis 1000 nm vorliegen.

3.  Dispersion nach einem der vorhergehenden Ansprüche,
    **dadurch gekennzeichnet,**
    **daß** es sich um eine Dispersion handelt,
    die unter Anlegen von Vakuum in einem ersten und/oder zweiten rotierenden Wirbel homogenisiert ist und/oder deren Cluster-Strukturen der in der Trägerflüssigkeit nicht löslichen Komponente durch Kavitation zu Nano-Tröpfchen und/oder Nano-Partikeln und/oder Nano-Aggregaten aufgebrochen sind.

4.  Dispersion nach einem der vorhergehenden Ansprüche,
    dadurch gekenntzeichnet,
    daß die Tröpfchen- und/oder Partikelgröße und/oder Aggregatgröße von mindestens 68% der Tröpfchen und/oder Partikel und/oder Aggregate der in der Trägerflüssigkeit nicht löslichen Komponente zwischen 1 nm bis 100 nm liegt.

5.  Dispersion nach einem der vorhergehenden Ansprüche,

**dadurch gekennzeichnet,**
**daß** die Menge an Trägerflüssigkeit 50 bis 99 Gew.-%, bezogen auf die Gesamtmenge der Dispersion beträgt.

6. Dispersion nach einem der vorhergehenden Ansprüche,
**dadurch gekennzeichnet,**
**daß** die Dispersion eine Stabilität für einen Zeitraum von 5 Minuten bis 5 Jahren aufweist.

7. Verfahren zur Herstellung einer Dispersion aus einer Trägerflüssigkeit, beispielsweise Wasser, und einer in der Trägerflüssigkeit nicht löslichen Komponente, welche als gleichmäßig verteilte Tröpfchen oder Partikel vorliegt,
**dadurch gekennzeichnet,**
**daß** die Dispersion unter Anlegen von Vakuum mit Hilfe eines ernsten rotierenden Wirbels und/oder eines zweiten rotierenden Wirbels, der den ersten Wirbel umgibt, homogenisiert wird, und/oder
**daß** Cluster-Strukturen der in der Trägerflüssigkeit nicht löslichen Komponente durch Kavitation aufgebrochen werden.

8. Verfahren nach Anspruch 7,
**dadurch gekennzeichnet,**
**daß** die Cluster-Strukturen der in der Trägerflüssigkeit nicht löslichen Komponente am Ende des einen Wirbels durch hinter Rotorblättern eines im andern Wirbel entgegengesetzt zu diesem Wirbels rotierenden Rotors (14) auftretende Kavitation aufgebrochen werden.

9. Verfahren nach einem der Ansprüche 7 oder 8,
**dadurch gekennzeichnet,**
**daß** die Cluster-Strukturen durch Kavitation zu mindestens 68% zu Nano-Tröpfchen und/oder Nano-Partikeln < 300 nm aufgebrochen werden.

10. Verfahren nach einem der Ansprüche 7 bis 9,
**dadurch gekennzeichnet,**
**daß** die Dispersion während des Dispergierens einem Magnetfeld und/oder einem elektrostatischen Feld und/oder einem elektromagnetischen Feld ausgesetzt wird und vorzugsweise die Achse des ersten und/oder des zweiten Wirbels zum Magnetfeld der Erde ausgerichtet wird.

11. Verfahren zur Herstellung einer Nano-Dispersion aus einer Flüssigkeit und mindestens einem festen oder flüssigen Additiv,
wobei die so gebildete Dispersion in einem geschlossenen rotationssymmetrischen Gehäuse (10), das einen rotationssymmetrischen Innentubus (11, 51) aufweist, mit einer mit einem Rotor (14) ausgebildeten Umwälzeinrichtung in einem Kreislauf im Innern des Innentubus (11, 51) in einem rotierenden Wirbel von oben nach unten fließend und im Zwischenraum zwischen Außenwandung des Innentubus (11, 51) und Innenwandung des Gehäuses (10) in einem rotierenden Wirbel mit umgekehrter Drehrichtung von unten nach oben fließend umgewälzt wird,
**dadurch gekennzeichnet,**
**daß** die Dispersion in einem ersten Kreislaufabschnitt, in der sie mit einem ersten Abschnitt des Rotors (14) zusammenwirkt, homogenisiert wird, wobei die Drehzahl des Rotors (14) so eingestellt ist, daß die Cluster-Strukturen des Additivs und/oder der Trägerflüssigkeit im wesentlichen durch Kavitation aufgebrochen werden,
**daß** die Drehrichtung der Dispersion in einem stromabwärts folgenden zweiten Kreislaufabschnitt umgekehrt wird, und daß das Additiv im ersten Kreislaufabschnitt oder in dem stromaufwärts benachbarten Kreislaufabschnitt unter Druck eingesprüht wird.

12. Verfahren nach einem der Ansprüche 7 bis 11,
**dadurch gekennzeichnet,**
**daß** Trägerflüssigkeit in einer Menge von 50 bis 99 Gew.-%, bezogen auf die Gesamtmenge der Dispersion eingesetzt wird.

13. Verfahren nach einem der Ansprüche 7 bis 12,
**dadurch gekennzeichnet,**
**daß** zunächst in einem ersten Schritt Wasser als Trägerflüssigkeit homogenisiert wird und in einem zweiten Schritt eine in Wasser nicht lösliche Komponente hinzugefügt und homogenisiert wird.

**Claims**

1. Dispersion of a carrier fluid, for example water, and at least one component that is insoluble in the carrier fluid, said component occurring as evenly distributed droplets and/or particles and/or aggregates,
   **characterised in that**
   the droplet and/or particle size and/or aggregate size of at least 68% of the droplets and/or particles and/or aggregates is between 1 nm and 300 nm, and
   the droplets and/or particles and/or aggregates are integrated into the structure of the carrier fluid in such a way that no further component is required as stabiliser component for the long-term stabilisation of the dispersion, wherein the dispersion has a zeta potential in a range of more than 15 mV, wherein the zeta potential can have both a positive and negative value.

2. Dispersion, preferably according to claim 1, comprising a carrier fluid and at least one component that is insoluble in the carrier fluid, said component occurring as evenly distributed droplets and/or particles and/or aggregates,
   **characterised in that**
   the dispersion comprises less than 1% by weight stabiliser component relative to the total amount of dispersion, and wherein at least 70% by weight of the insoluble components relative to the total amount of the insoluble component are in the form of droplets and/or particles and/or aggregates of a size ranging from 0.1 to 1000 nm.

3. Dispersion according to one of the preceding claims,
   **characterised in that**
   it is a dispersion
   which is homogenised under application of a vacuum in a first or second rotating vortex and/or
   whose cluster-structures of the component that is insoluble in the carrier fluid are broken up by cavitation into nano-droplets and/or nano-particles and/or nano-aggregates.

4. Dispersion according to one of the preceding claims,
   **characterised in that**
   the droplet and/or particle size and/or aggregate size of at least 68% of the droplets and/or particles and/or aggregates of the component that is insoluble in the carrier fluid is between 1 nm and 100 nm.

5. Dispersion according to one of the preceding claims,
   **characterised in that**
   the amount of carrier fluid is 50 to 99% by weight relative to the total amount of the dispersion.

6. Dispersion according to one of the preceding claims,
   **characterised in that**
   the dispersion has stability for a period of 5 minutes to 5 years.

7. Method for the production of a dispersion from a carrier fluid, for example water, and a component that is insoluble in the carrier fluid, said component occurring as evenly distributed droplets or particles,
   **characterised in that**
   the dispersion is homogenised under application of a vacuum with the help of a first rotating vortex and/or a second rotating vortex which surrounds the first vortex, and/or
   the cluster structures of the component that is insoluble in the carrier fluid are broken up by cavitation.

8. Method according to claim 7,
   **characterised in that**
   the cluster structures of the component that is insoluble in the carrier fluid are broken down at the end of the first vortex by cavitation that takes places behind rotor blades of a rotor (14) in the other vortex rotating in the opposite direction to this vortex.

9. Method according to one of claims 7 or 8,
   **characterised in that**
   the cluster structures are broken up by cavitation by at least 68% into nano-droplets and/or nano-particles of < 300 nm.

10. Method according to one of claims 7 to 9,
    **characterised in that**

**EP 1 945 340 B1**

during the dispersing, the dispersion is exposed to a magnetic field and/or an electrostatic field and/or an electromagnetic field, and preferably the axis of the first and/or the second vortex is aligned with earth's magnetic field.

11. Method for the production of a nano-dispersion of a fluid and at least one solid or liquid additive, wherein the dispersion formed in this way is circulated in an enclosed, rotationally symmetrical housing (10) that has a rotationally symmetrical inner tube (11, 51), in a circle inside the inner tube (11, 51) in a rotating vortex, by a circulating device fitted with a rotor, flowing from top to bottom and in the space between the outer wall of the inner tube (11, 51) and the inner wall of the housing (10) in a rotating vortex with the opposite rotational direction, flowing from bottom to top, **characterised in that**
the dispersion is homogenised in a first circulation section, in which it interacts with a first section of the rotor (14), wherein the number of revolutions of the rotor (14) is adjusted in such a way that the cluster structures of the additives and/or the carrier fluid are substantially broken up by cavitation,
the rotational direction of the dispersion is reversed in a second circulation section that follows downstream, and the additive is sprayed under pressure into the initial circulation section or the adjacent upstream circulation section.

12. Method according to one of claims 7 to 11,
**characterised in that**
the carrier fluid is used in a quantity of 50 to 99% by weight relative to the total amount of the dispersion.

13. Method according to one of claims 7 to 12,
**characterised in that**
in a first step, water is firstly homogenised as a carrier fluid and, in a second step, a component that is insoluble in water is added and homogenised.

**Revendications**

1. Dispersion formée d'un liquide porteur, par exemple de l'eau, et d'au moins un composant non soluble dans le liquide porteur, lequel est présent sous la forme de gouttelettes et/ou de particules et/ou d'agrégats régulièrement répartis,
**caractérisée en ce**
**que** la taille des gouttelettes et/ou particules et/ou agrégats d'au moins 68 % des gouttelettes et/ou particules et/ou agrégats se situe entre 1 nm et 300 nm, et
**que** les gouttelettes et/ou particules et/ou agrégats sont incorporés dans la structure du liquide porteur de telle sorte qu'aucun composant supplémentaire ne soit nécessaire comme composant stabilisateur pour la stabilisation à long terme,
la dispersion présentant un potentiel zêta dans une plage supérieure à 15 mV, le potentiel zêta pouvant présenter une valeur positive ou négative.

2. Dispersion, de préférence selon la revendication 1, comprenant un liquide porteur et au moins un composant non soluble dans le liquide porteur, lequel est présent sous la forme de gouttelettes et/ou de particules et/ou d'agrégats régulièrement répartis,
**caractérisée en ce**
**que** la dispersion comprend moins de 1 % en poids de composants stabilisateurs, par rapport à la quantité totale de la dispersion, et au moins 70 % en poids du composant non soluble, par rapport à la quantité totale du composant non soluble, sont présents sous la forme de gouttelettes et/ou de particules et/ou d'agrégats d'une taille dans la plage de 0,1 à 1000 nm.

3. Dispersion selon l'une des revendications précédentes,
**caractérisée en ce**
**qu'**il s'agit d'une dispersion
qui est homogénéisée dans un premier et/ou deuxième vortex rotatif sous application de vide et/ou
dont les structures en clusters du composant non soluble dans le liquide porteur sont brisées par cavitation en nanogouttelettes et/ou nanoparticules et/ou nano-agrégats.

4. Dispersion selon l'une des revendications précédentes,
**caractérisée en ce**
**que** la taille des gouttelettes et/ou particules et/ou agrégats d'au moins 68 % des gouttelettes et/ou particules et/ou agrégats du composant non soluble dans le liquide porteur se situe entre 1 nm et 100 nm.

**5.** Dispersion selon l'une des revendications précédentes,
**caractérisée en ce**
**que** la quantité de liquide porteur représente 50 à 99 % en poids, par rapport à la quantité totale de la dispersion.

**6.** Dispersion selon l'une des revendications précédentes,
**caractérisée en ce**
**que** la dispersion présente une stabilité pendant une période allant de 5 minutes à 5 ans.

**7.** Procédé de fabrication d'une dispersion formée d'un liquide porteur, par exemple de l'eau, et d'un composant non soluble dans le liquide porteur, lequel est présent sous la forme de gouttelettes ou de particules régulièrement réparties,
**caractérisé en ce**
**que** la dispersion est homogénéisée sous application de vide à l'aide d'un premier vortex rotatif et/ou d'un deuxième vortex rotatif qui entoure le premier vortex, et/ou
**que** les structures en clusters du composant non soluble dans le liquide porteur sont brisées par cavitation.

**8.** Procédé selon la revendication 7,
**caractérisé en ce**
**que** les structures en clusters du composant non soluble dans le liquide porteur sont brisées à la fin d'un vortex par la cavitation se produisant derrière les pales de rotor d'un rotor (14) tournant dans l'autre vortex en sens inverse de ce vortex.

**9.** Procédé selon l'une des revendications 7 ou 8,
**caractérisé en ce**
**que** les structures en clusters sont brisées par cavitation à au moins 68 % en nanogouttelettes et/ou nanoparticules < 300 nm.

**10.** Procédé selon l'une des revendications 7 à 9,
**caractérisé en ce**
**que**, pendant la dispersion, la dispersion est exposée à un champ magnétique et/ou un champ électrostatique et/ou un champ électromagnétique et, de préférence, l'axe du premier et/ou du deuxième vortex est aligné sur le champ magnétique de la Terre.

**11.** Procédé de fabrication d'une nanodispersion formée d'un liquide et d'au moins un additif solide ou liquide, la dispersion ainsi formée étant mise en circulation dans un boîtier fermé à symétrie de révolution (10), qui présente un tube interne à symétrie de révolution (11, 51), avec un dispositif de circulation réalisé avec un rotor (14) dans un circuit à l'intérieur du tube interne (11, 51), en un vortex rotatif s'écoulant de haut en bas et, dans l'intervalle entre la paroi extérieure du tube interne (11, 51) et la paroi intérieure du boîtier (10), en un vortex rotatif de sens de rotation inverse s'écoulant de bas en haut,
**caractérisé en ce**
**que** la dispersion est homogénéisée dans une première section de circuit, dans laquelle elle coopère avec une première section du rotor (14), la vitesse de rotation du rotor (14) étant réglée de façon que les structures en clusters de l'additif et/ou du liquide porteur soient brisées sensiblement par cavitation,
**que** le sens de rotation de la dispersion est inversé dans une deuxième section de circuit suivante en aval, et
**que** l'additif est injecté sous pression dans la première section de circuit ou dans la section de circuit adjacente en amont.

**12.** Procédé selon l'une des revendications 7 à 11,
**caractérisé en ce**
**que** le liquide porteur est utilisé dans une quantité de 50 à 99 % en poids, par rapport à la quantité totale de la dispersion.

**13.** Procédé selon l'une des revendications 7 à 12,
**caractérisé en ce**
**que**, dans une première étape, de l'eau est homogénéisée en tant que liquide porteur et, dans une deuxième étape, un composant non soluble dans l'eau est ajouté et homogénéisé.

Fig. 1

**Fig.2**

*Fig. 3*

*Fig.4*

Fig. 5

EP 1 945 340 B1

Fig. 6

**Fig. 7a**

**Fig. 7b**

**Fig. 8**

*Fig. 9a*

*Fig. 9b*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10334897 A1
- EP 1216958 A2
- EP 0987007 A2

**In der Beschreibung aufgeführte Nicht-Patentliteratur**

- **B. VONNEGUT.** *Rev. Sci.Instr.,* 1942
- Einführung in die Theorie der dynamischen Lichtstreuung verdünnter Lösungen großer Moleküle. Applied Research Laboratories. J. Springer, 1970